# EUROPEAN PATENT APPLICATION

(11) **EP 4 835 837 A1**
(43) Date of publication of application: **04.11.2026**
(21) Application number: 24911833.2
(22) Date of filing: 06.08.2024
(51) Int. Cl.: G06V 10/776, G06T 7/00, G06V 10/72

(54) **ANALYSIS METHOD AND ANALYSIS DEVICE FOR IMAGE RECOGNITION PROCESSING**

(30) Priority: 28.12.2023 JP 2023223650
(71) Applicant: Astemo, Ltd., Chiyoda-ku, Tokyo 1000004 (JP)
(72) Inventor: KITAYAMA, Akira, Tokyo 100-8280 (JP); IKUTA, Mitsuki, Tokyo 100-8280 (JP); ITO, Hiroaki, Hitachinaka-shi, Ibaraki 312-8503 (JP)
(74) Representative: MERH-IP Matias Erny Reichl Hoffmann Patentanwälte PartG mbB
(86) International application number: PCT/JP2024/028153
(87) International publication number: WO 2025/141935

(57) **Abstract**

An analysis method for an image recognition process is a method of analyzing an image recognition process for recognizing a recognition target object appeared in an input image, and the method includes: generating, by a computer, a plurality of perturbation images in which a perturbation is superimposed on the input image; acquiring, by the computer, evaluation values for a recognition result of the object obtained by executing the image recognition process on the plurality of perturbation images; calculating, by the computer, a perturbation influence degree of the perturbation on the image recognition process based on the evaluation values acquired for the perturbation images; and adjusting, by the computer, the perturbation based on the perturbation influence degree.

## Description

### Technical Field

The present invention relates to an analysis method and an analysis device for an image recognition process.

### Background Art

In the related art, in a vehicle such as an automobile, a technique is known in which a surrounding situation of the vehicle is recognized by a computer based on an image captured by a camera, and autonomous driving of the vehicle is performed using a recognition result. A surroundings perception for realizing such autonomous driving is strongly required to have not only high recognition performance but also reliability and safety. Therefore, in recent years, recognition performance higher than that of the related art has been realized by recognizing a surrounding situation of the vehicle using an image recognition process to which artificial intelligence (AI) is applied.

In the AI-based image recognition process, the recognition performance greatly changes according to a learning degree of AI, but it is difficult to prepare in advance learning data covering all situations that may occur in a real environment during autonomous driving of the vehicle. Therefore, it is known that unknown scenes that are not included in the learning data of the AI are infinitely present in the real environment, and a recognition error unintended by a designer may occur. In order to reduce the occurrence of such a recognition error as much as possible and ensure reliability and safety, in the image recognition process for autonomous driving, it is strongly required to continue to evolve AI by acquiring data indicating the surrounding situation of the vehicle in the real environment as external data and repeatedly performing retraining of AI using the external data.

In order to appropriately evolve the AI for an image recognition process, for example, it is preferable to collect data such as an object to be newly recognized by the AI or a scene in which a recognition error has occurred in the past as external data and use the collected external data for retraining of the AI. As a result, an object or a scene that has not been correctly recognized by AI before retraining can be correctly recognized by the AI after retraining. However, among objects or scenes that have been correctly recognized by AI before retraining, there are many objects or scenes that are accidentally correct by AI without confidence and many unstable objects that cannot be correctly recognized even by a slight environmental change (a change in illuminance, saturation, noise, or the like). Thus, it is said that an occurrence rate of an unstable recognition result is larger than a probability of the recognition error. That is, in order to realize the AI for an image recognition process with truly high reliability, it can be said that it is necessary to extract more training data that makes the recognition result of the AI unstable from various data collected so far and a collected data set.

Various existing techniques have been studied for a method of quantifying the stability, certainty, and the like of an AI-based image recognition process. As one of the techniques, a technique of visualizing model attribution of AI has been proposed. For example, PTL 1 discloses a technique of visualizing a saliency region of AI by using information on how a result of executing inference by adding a perturbation to an input image of AI has changed with respect to an inference result without a perturbation. By utilizing the information of the saliency region, it is possible to extract data in which the recognition of AI becomes unstable.

### Citation List

### Patent Literature

PTL 1: US2021/0357644

### Summary of Invention

### Technical Problem

As in the technique of PTL 1, in many techniques of visualizing a saliency region of inference, a designer visually checks whether a visualization result is sufficiently high in quality, and in a case where it is determined that the quality is poor, there is a need for trial and error to reset various parameters used for visualization and visualize again. In this case, it is necessary to manually adjust a perturbation setting parameter according to an object size of the recognition target and a recognition difficulty level. Therefore, analysis of a large amount of collected data sets requires much human cost and time, and it is difficult to improve analysis efficiency.

### Solution to Problem

An analysis method for an image recognition process according to the invention is a method of analyzing an image recognition process for recognizing a recognition target object appeared in an input image, and the method includes: generating, by a computer, a plurality of perturbation images in which a perturbation is superimposed on the input image; acquiring, by the computer, evaluation values for a recognition result of the object obtained by executing the image recognition process on the plurality of perturbation images; calculating, by the computer, a perturbation influence degree of the perturbation on the image recognition process based on the evaluation values acquired for the perturbation images; and adjusting, by the computer, the perturbation based on the perturbation influence degree.

An analysis device according to the invention is a device for analyzing an image recognition process for recognizing a recognition target object appeared in an input image, and the device includes: a perturbation superimposition unit configured to generate a plurality of perturbation images in which a perturbation is superimposed on the input image; an evaluation value acquisition unit configured to acquire evaluation values for a recognition result of the object obtained by executing the image recognition process on the plurality of perturbation images generated by the perturbation superimposition unit; a perturbation ratio evaluation unit configured to calculate a perturbation influence degree of the perturbation on the image recognition process based on the evaluation values acquired for the perturbation images by the evaluation value acquisition unit; and a parameter tuning unit configured to adjust the perturbation based on the perturbation influence degree calculated by the perturbation ratio evaluation unit.

### Advantageous Effects of Invention

According to the invention, it is possible to automatically adjust a perturbation necessary for visualization of a saliency region in inference in an image recognition process, and to significantly increase analysis efficiency of a large-scale data set.

### Brief Description of Drawings

[FIG. 1] FIG. 1 is a diagram showing an example of a hardware structure of an image recognition processing analysis device according to a first embodiment of the invention.
[FIG. 2] FIG. 2 is a functional block diagram showing a functional configuration example of the image recognition processing analysis device according to the first embodiment of the invention.
[FIG. 3] FIG. 3 is a flowchart showing an analysis method for an image recognition process according to the first embodiment of the invention.
[FIG. 4] FIG. 4 is a flowchart showing a procedure of a perturbation evaluation process.
[FIG. 5] FIG. 5 is a flowchart showing a procedure of a perturbation ratio tuning process.
[FIG. 6] FIG. 6 is a flowchart showing an example of a perturbation influence degree determination method.
[FIG. 7] FIG. 7 is a diagram showing a distribution example of an evaluation value for each perturbation influence degree.
[FIG. 8] FIG. 8 is a functional block diagram showing a functional configuration example of an image recognition processing analysis device according to a second embodiment of the invention.
[FIG. 9] FIG. 9 is a flowchart showing an analysis method of an image recognition process according to the second embodiment of the invention.
[FIG. 10] FIG. 10 is a flowchart showing a procedure of a perturbation resolution tuning process.
[FIG. 11] FIG. 11 is a diagram showing an example of a visualization result and distribution of a saliency region for each resolution of the perturbation.
[FIG. 12] FIG. 12 is a functional block diagram showing a functional configuration example of an image recognition processing analysis device according to a third embodiment of the invention.
[FIG. 13] FIG. 13 is a flowchart showing an analysis method for an image recognition process according to the third embodiment of the invention.
[FIG. 14] FIG. 14 is a diagram showing an example of an analysis region set for each object.
[FIG. 15] FIG. 15 is a functional block diagram showing a functional configuration example of the image recognition processing analysis device according to a fourth embodiment of the invention.
[FIG. 16] FIG. 16 is a flowchart showing an analysis method for an image recognition process according to the fourth embodiment of the invention.

### Description of Embodiments

Hereinafter, embodiments according to the invention will be described with reference to the drawings. The embodiments are examples for describing the invention, and are omitted and simplified as appropriate for clarity of description. The invention can be implemented in various other forms. Unless otherwise specified, each component may be singular or plural.

In order to facilitate understanding of the invention, a position, size, shape, range, and the like of each component shown in the drawings may not represent an actual position, size, shape, range, and the like. Therefore, the invention is not necessarily limited to the positions, sizes, shapes, ranges, or the like disclosed in the drawings. When there are a plurality of components having the same or similar functions, the components may be described by using the same reference signs assigned with different subscripts. When there is no need to distinguish the plurality of components, the description may be made by omitting the subscripts.

In each embodiment, a process executed by executing a program may be described. Here, a computer executes the program by a processor (for example, a CPU or a GPU) and executes a process defined by the program using a storage resource (for example, a memory), an interface device (for example, a communication port), and the like. Therefore, a subject of the process executed by executing the program may be the processor. Similarly, the subject of the process executed by executing the program may be a controller, a device, a system, a computer, or a node including the processor. The subject of the process executed by executing the program may be a calculation unit and may include a dedicated circuit that executes a specific process. Here, the dedicated circuit is, for example, a field programmable gate array (FPGA), an application specific integrated circuit (ASIC), and a complex programmable logic device (CPLD).

The program may be installed on the computer from a program source. The program source may be, for example, a program distribution server or a computer-readable storage medium. When the program source is the program distribution server, the program distribution server may include a processor and a storage resource for storing a program to be distributed, and the processor of the program distribution server may distribute the program to be distributed to another computer. In the embodiments, two or more programs may be implemented as one program, or one program may be implemented as two or more programs.

In recent years, in order to realize advanced autonomous driving, a periphery recognition application using an image recognition program to which a deep neural network (DNN), which is one type of AI using machine learning, is applied has been widely used. A program using AI such as a DNN has a problem in that it is difficult to cope with a case where there is a failure because it is unclear why such inference is performed on a recognition result obtained by AI inference as compared with a rule-based algorithm.

In order to solve such a problem, a technique (Grad-CAM, RISE, or the like) of visualizing an image region that attracts attention in AI inference has been reported. As a specific example, an event is considered in which the entire vehicle that is a recognition target object is firmly shown in an image, a position of a vehicle can be accurately inferred by an inference result of AI for this image, and if the vehicle is to be continuously detected even though a reliability score of the inference is very high, missed detection frequently occurs. As a result of visualizing a saliency region for a vehicle appeared in an image in which this event has occurred, only a part of the vehicle (for example, a part such as a windshield) may be focused on in the inference. It can be said that such a situation corresponds to a condition that is likely to be undetected for inference by AI in a case where the portion is shielded by another object, a case where the portion becomes unclear due to an influence of a light amount or noise at the time of imaging, or the like.

As described above, visualization of a saliency region in inference by AI can be effectively utilized to determine a cause of a failure in machine learning. However, a structure of a neural network used for the DNN and the characteristics (a size, a direction, difficulty of recognition, and the like) of the recognition target object in the input image change for each situation, and thus are not uniform, and in the visualization of the saliency region, optimum values of parameters for obtaining a high-quality visualization result are different according to these differences. Therefore, it is necessary to visually check the quality of the visualized saliency region and to adjust the parameters and visualize the saliency region again in the case of low quality. That is, in a case of analyzing the image recognition result of the AI for a large-scale data set, the number of steps of trial and error required for adjusting the parameters is a problem. In a case of visualization of a saliency region in an application in which conditions such as a size, a direction, and a recognition difficulty level of a recognition target object are substantially constant, such tuning work of parameters is often unnecessary. In an application in which various types of objects are required to be recognized in various scenes such as external recognition of an automobile, in particular, parameter tuning is necessary.

The invention efficiently realizes analysis of an image recognition result of AI for a large-scale data set by automatically performing parameter tuning when visualizing a saliency region in inference by AI such as a DNN. In the following embodiments, an example will be described in which the invention is applied to an object recognition DNN in an in-vehicle ECU for vehicle control, for example, an advanced driver assistance system (ADAS) or autonomous driving (AD). However, the invention is not limited to the in-vehicle ECU for ADAS and AD, and is applicable to all applications using the object detection AI.

### First Embodiment

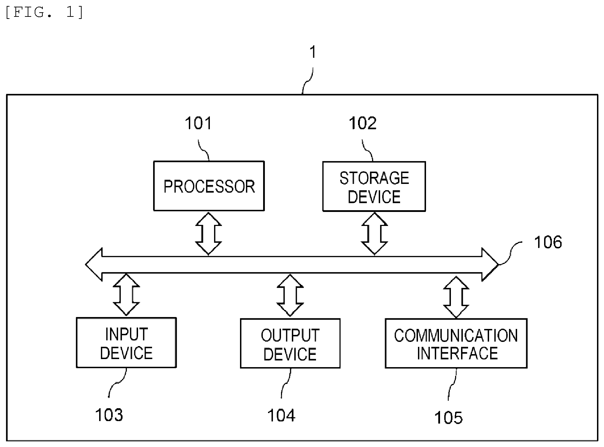

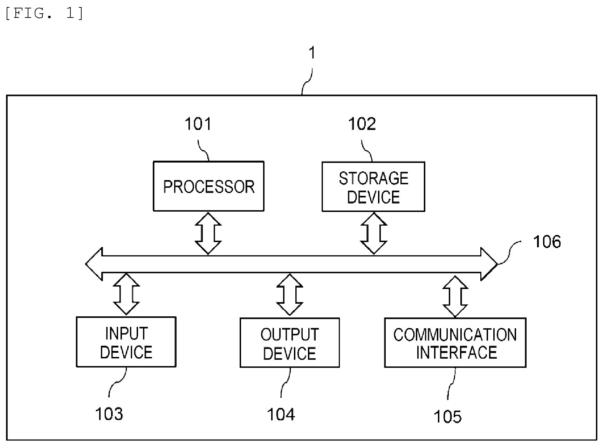

Hereinafter, an analysis method and an analysis device for an image recognition process according to a first embodiment of the invention will be described with reference to FIGS. 1 to 7.

FIG. 1 is a diagram showing a hardware structure example of an image recognition processing analysis device (hereinafter, simply referred to as an "analysis device") 1 according to the first embodiment of the invention. The analysis device 1 is, for example, a computer such as a server or a PC, and is formed by connecting a processor 101, a storage device 102, an input device 103, an output device 104, and a communication interface (communication interface) 105 to each other via a communication bus 106.

The processor 101 controls an operation of the analysis device 1 by executing a predetermined program, and causes a computer such as a server or a PC to function as the analysis device 1. The storage device 102 is a recording medium capable of non-temporarily or temporarily storing various programs and data, and is implemented using, for example, a read only memory (ROM), a random access memory (RAM), a hard disk drive (HDD), and a flash memory. The input device 103 is a device that receives data input to the analysis device 1 from a user, and is implemented using a keyboard, a mouse, a touch panel, a microphone, or the like. The output device 104 is a device that outputs data to a user, and is implemented using a display, a printer, a speaker, or the like. The communication interface 105 transmits and receives data between the analysis device 1 and an external information device (not shown) via a communication network (not shown).

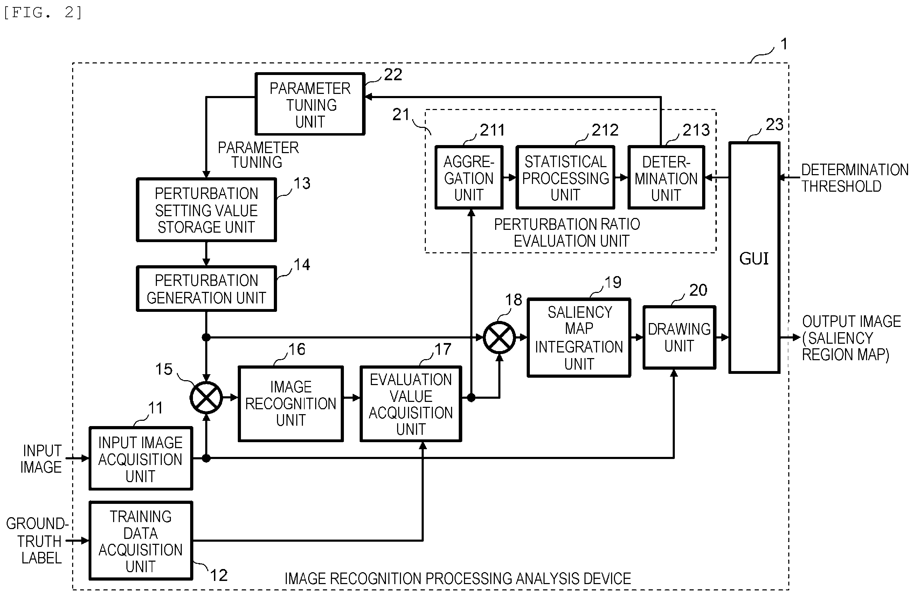

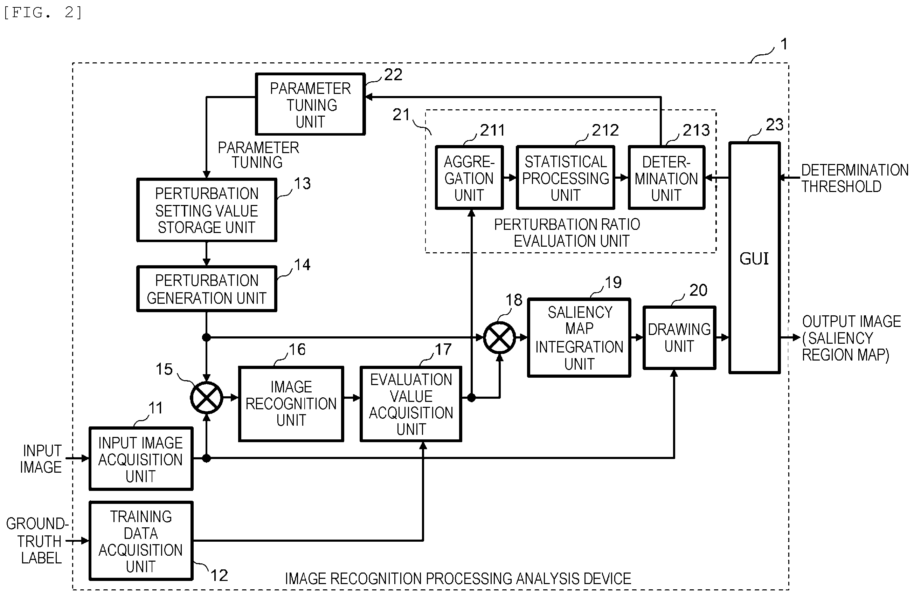

FIG. 2 is a functional block diagram showing a functional configuration example of the analysis device 1 according to the first embodiment of the invention. The analysis device 1 includes an input image acquisition unit 11, a training data acquisition unit 12, a perturbation setting value storage unit 13, a perturbation generation unit 14, a perturbation superimposition unit 15, an image recognition unit 16, an evaluation value acquisition unit 17, a saliency map generation unit 18, a saliency map integration unit 19, a drawing unit 20, a perturbation ratio evaluation unit 21, a parameter tuning unit 22, and a graphical user interface (GUI) 23 as functions for executing an AI-based image recognition process and analyzing the inference result.

Specifically, the input image acquisition unit 11, the training data acquisition unit 12, the perturbation generation unit 14, the perturbation superimposition unit 15, the image recognition unit 16, the evaluation value acquisition unit 17, the saliency map generation unit 18, the saliency map integration unit 19, the drawing unit 20, the perturbation ratio evaluation unit 21, the parameter tuning unit 22, and the GUI 23 are implemented by causing the processor 101 to execute programs stored in the storage device 102 shown in FIG. 1, for example. Specifically, the perturbation setting value storage unit 13 is implemented by, for example, the storage device 102 shown in FIG. 2.

The input image acquisition unit 11 acquires an input image to be subjected to image recognition process executed by the analysis device 1. The training data acquisition unit 12 acquires, as training data of the input image, a ground-truth label indicating a correct answer of a recognition result for the input image. The input image acquisition unit 11 and the training data acquisition unit 12 can acquire the input image and the ground-truth label based on information stored in the storage device 102 and information received via the communication network by the communication interface 105.

The perturbation generation unit 14 generates a perturbation that serves as noise when the image recognition process is executed on the input image. The perturbation setting value storage unit 13 stores setting values of various parameters when the perturbation generation unit 14 generates a perturbation. For example, information such as a type, intensity, and resolution of a perturbation, a perturbation analysis method, and a threshold used for perturbation evaluation is stored in the perturbation setting value storage unit 13 as setting values of parameters used for perturbation generation. The perturbation generation unit 14 generates a plurality of perturbations having different patterns according to the values of the parameters stored in the perturbation setting value storage unit 13, and outputs the perturbations to the perturbation superimposition unit 15 and the saliency map generation unit 18.

The perturbation superimposition unit 15 superimposes the perturbations generated by the perturbation generation unit 14 on the input image acquired by the input image acquisition unit 11 to generate a perturbation image in which the perturbations are superimposed on the input image. Here, as described above, the perturbation generation unit 14 generates a plurality of perturbations having different patterns. The perturbation superimposition unit 15 can generate a plurality of perturbation images for the same input image by superimposing the perturbations having different patterns on the input image.

The image recognition unit 16 executes an image recognition process using the trained DNN on each of the plurality of perturbation images generated by the perturbation superimposition unit 15. In the image recognition process executed by the image recognition unit 16, among various objects appeared in the input image, objects to be recognized by the ADAS or the AD, for example, surrounding vehicles or obstacles, various road signs, and the like are recognized. When the image recognition unit 16 executes the image recognition process using the DNN, a well-known arithmetic process can be used.

The evaluation value acquisition unit 17 acquires an evaluation value for the recognition result of the object obtained by the image recognition unit 16 executing the image recognition process on each perturbation image. For example, the evaluation value acquisition unit 17 compares the recognition result of the object for the perturbation image with the ground-truth label acquired by the training data acquisition unit 12, and sets the evaluation value for the recognition result of the object for each perturbation image such that the evaluation value becomes higher as a degree of match between the recognition result and the ground-truth label increases. Details of a method of acquiring an evaluation value by the evaluation value acquisition unit 17 will be described later.

The saliency map generation unit 18 generates saliency map relating to a saliency degree in the image recognition process when the image recognition unit 16 recognizes an object in a perturbation image, by applying a perturbation generated by the perturbation generation unit 14 to an evaluation value acquired for each perturbation image by the evaluation value acquisition unit 17. Details of a method of generating saliency map by the saliency map generation unit 18 will be described later.

The saliency map integration unit 19 integrates the saliency map for perturbation images generated by the saliency map generation unit 18 for the plurality of perturbation images generated by the perturbation superimposition unit 15. By this process, it is possible to integrate pieces of saliency map obtained for the plurality of perturbation images, and generate information for visualizing a saliency region focused on in inference in the image recognition process for the input image.

The drawing unit 20 draws the information of the saliency region obtained by the saliency map integration unit 19 integrating the saliency map to overlap the input image acquired by the input image acquisition unit 11. Accordingly, an output image in which a position of the saliency region in the input image is shown in a map is generated. The output image generated by the drawing unit 20 is presented to the user via the GUI 23. By viewing the output image, the user can visually confirm how much the perturbation affects the result of the image recognition process on the input image.

The perturbation ratio evaluation unit 21 calculates a perturbation influence degree indicating an influence degree of the perturbation on the image recognition process based on the evaluation value acquired for each perturbation image by the evaluation value acquisition unit 17. Based on the calculated perturbation influence degree, a ratio of a region where the perturbation generated by the perturbation generation unit 14 hides the input image (hereinafter referred to as a "perturbation ratio") is evaluated, and the evaluation result is notified to the parameter tuning unit 22.

The perturbation ratio evaluation unit 21 includes an aggregation unit 211, a statistical processing unit 212, and a determination unit 213. The aggregation unit 211 aggregates evaluation values for perturbation images acquired by the evaluation value acquisition unit 17. The statistical processing unit 212 obtains the distribution of the evaluation values in the plurality of perturbation images by statistically processing the evaluation values aggregated by the aggregation unit 211. The determination unit 213 calculates a perturbation influence degree based on the distribution of the evaluation values obtained by the statistical processing unit 212, and determines whether the perturbation ratio is appropriate by comparing the perturbation influence degree with a predetermined determination threshold. The obtained determination result is notified to the parameter tuning unit 22 as an evaluation result of the perturbation ratio. The determination threshold used for comparison with the perturbation influence degree in the determination unit 213 can be set by the user via the GUI 23.

The parameter tuning unit 22 adjusts the parameters stored in the perturbation setting value storage unit 13 based on the evaluation result of the perturbation ratio by the perturbation ratio evaluation unit 21 so that the perturbation ratio becomes an appropriate value. A specific parameter tuning method by the parameter tuning unit 22 will be described later.

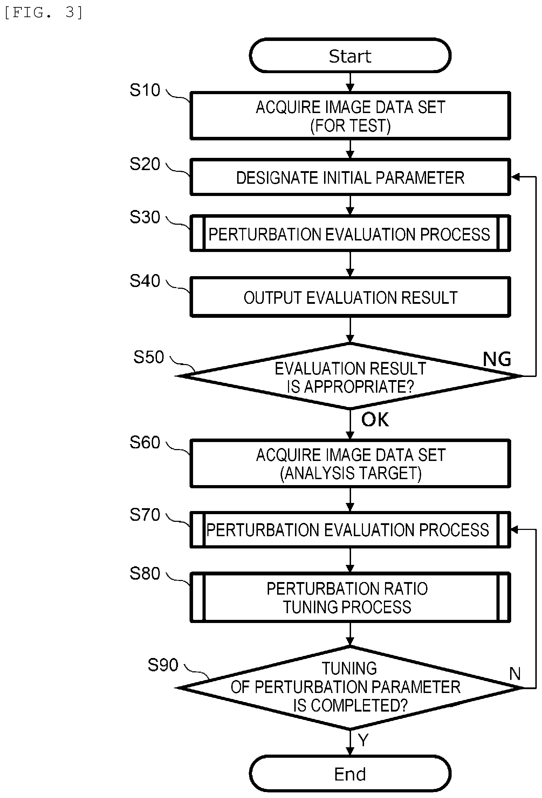

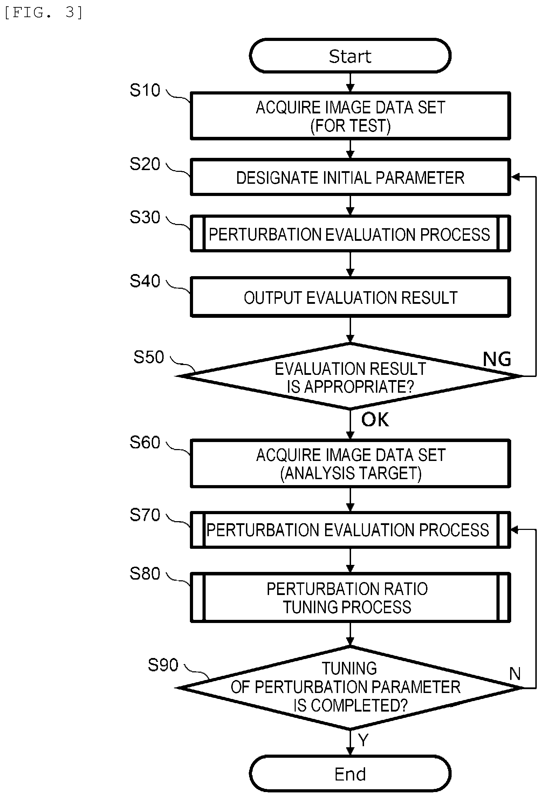

FIG. 3 is a flowchart showing an analysis method for an image recognition process according to the first embodiment of the invention. In the present embodiment, the analysis device 1 can analyze an image recognition result by the image recognition unit 16 by executing the process shown in the flowchart of FIG. 3 by the processor 101.

Steps S10 to S50 are processes for initial setting. In step S10, a test image data set is acquired. Here, by the input image acquisition unit 11 and the training data acquisition unit 12, a combination of any ground-truth label and any input image including an object to be recognized in the image recognition process executed by the image recognition unit 16 can be acquired as a test image data set within a range of, for example, several sets to several tens of sets.

In step S20, an initial parameter of a perturbation is designated. Here, for example, values input by the user via the GUI 23 for various parameters such as a type, intensity, and resolution of a perturbation, a perturbation analysis method, and a threshold used for perturbation evaluation are stored in the perturbation setting value storage unit 13 as initial parameters.

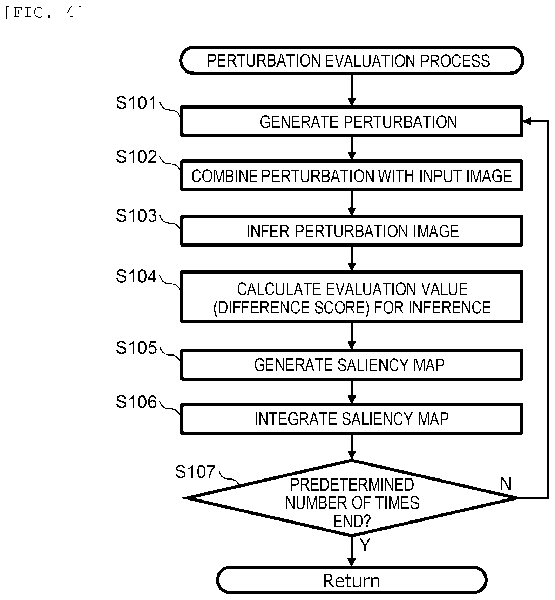

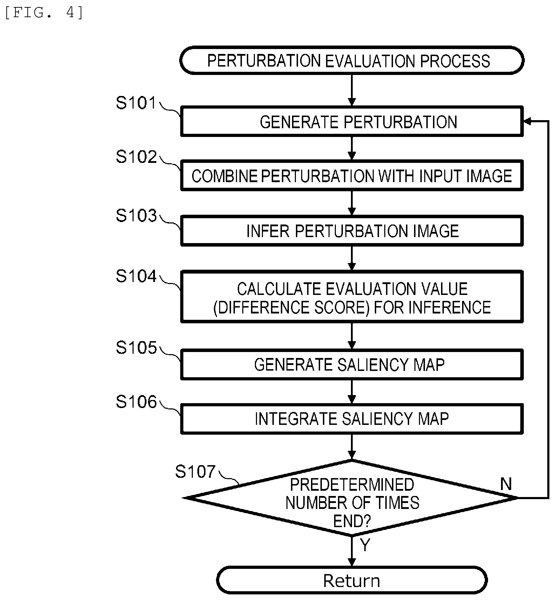

In step S30, a perturbation evaluation process is executed using the test image data set acquired in step S10. Here, the perturbation superimposition unit 15 superimposes a perturbation generated by the perturbation generation unit 14 on an input image to generate a perturbation image including noise, and the image recognition unit 16 executes an image recognition process on the perturbation image. Then, the evaluation value acquisition unit 17 acquires an evaluation value for the recognition result of the object in the image recognition process. Details of the perturbation evaluation process will be described later with reference to the flowchart of FIG. 4.

In step S40, a perturbation evaluation result by the perturbation evaluation process executed in step S30 is output. Here, for example, the evaluation value acquired by the perturbation evaluation process is superimposed on the input image and presented to the user via the GUI 23, so that the perturbation evaluation result by the set initial parameter is visualized and confirmed by the user.

In step S50, it is determined whether the perturbation evaluation result output in step S40 is appropriate. Here, for example, it is determined whether the perturbation evaluation result is appropriate according to the content of the input operation performed by the user via the GUI 23 with respect to the perturbation evaluation result. As a result, when it is determined that the perturbation evaluation result is appropriate, the process proceeds to step S60. On the other hand, when it is determined that the perturbation evaluation result is not appropriate, the process returns to step S20 and, once the initial parameter of the perturbation is reset, the perturbation evaluation process of step S30 is executed again, and it is determined whether the evaluation result is not appropriate. Accordingly, the setting of the initial parameter of the perturbation is repeatedly performed until an appropriate perturbation evaluation result is obtained for the test image data set, and a value of the initial parameter finally set is used as a parameter for perturbation generation in the subsequent process.

Steps S60 to S90 are processes for adjusting a perturbation. In step S60, an image data set of an analysis target is acquired. Here, as in step S10, the input image acquisition unit 11 and the training data acquisition unit 12 can acquire, as an image data set of an analysis target, a combination of any ground-truth label and any input image including a recognition object in the image recognition process executed by the image recognition unit 16. At this time, the same combination of the input image and the ground-truth label as in step S10 may be acquired as an image data set of an analysis target, or may be a different combination. In addition, more image data sets than the test image data set may be acquired as an image data set of an analysis target, or less image data sets may be acquired. However, in order to perform learning of the image recognition unit 16 using a large amount of image data, it is preferable to acquire, as a data set of an analysis target, more image data sets than the test image data set.

In step S70, the same perturbation evaluation process as in step S30 is executed using the image data set of an analysis target acquired in step S60.

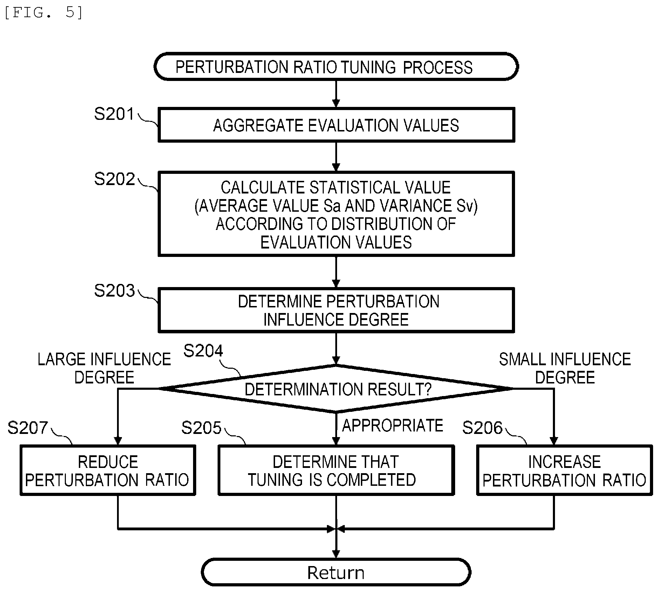

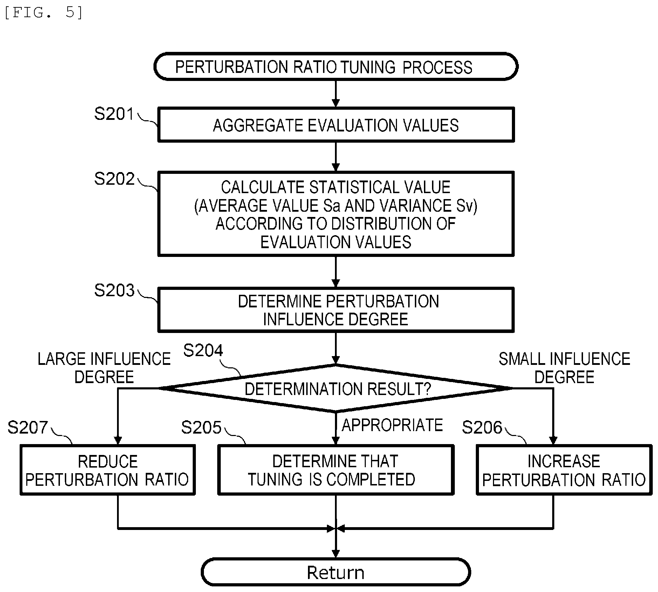

In step S80, a perturbation ratio tuning process based on the perturbation evaluation result obtained by the perturbation evaluation process executed in step S70 is executed. Here, by aggregating and statistically processing the evaluation values for perturbation images acquired in the perturbation evaluation process by the perturbation ratio evaluation unit 21, a perturbation influence degree of the perturbation on the image recognition process is calculated. Whether the perturbation ratio is appropriate is determined based on the calculated perturbation influence degree, and the determination result is output to the parameter tuning unit 22. The parameter tuning unit 22 adjusts a value of a parameter related to the perturbation ratio among perturbation parameters stored in the perturbation setting value storage unit 13 based on the determination result of the perturbation ratio input from the perturbation ratio evaluation unit 21. Details of the perturbation ratio tuning process will be described later with reference to the flowchart of FIG. 5.

In step S90, it is determined whether the tuning of the perturbation parameters is completed based on the determination result of the perturbation ratio obtained by the perturbation ratio tuning process executed in step S80. Here, in a case where the determination result indicating that the perturbation ratio is appropriate is obtained in the perturbation ratio tuning process executed immediately before, and thus the tuning of the parameter values is not performed, it is determined that the tuning of the perturbation parameters is completed, and the process shown in the flowchart of FIG. 3 is completed. On the other hand, in a case where the determination result indicating that the perturbation ratio is not appropriate is obtained in the perturbation ratio tuning process performed immediately before, and thus the tuning of the parameter values is performed, it is determined that the tuning of the perturbation parameters is not completed, and the process returns to step S70. In this case, the perturbation evaluation process in step S70 and the perturbation ratio tuning process in step S80 are executed again using the adjusted parameter value. Accordingly, the tuning of the perturbation parameter is repeatedly performed until an appropriate perturbation ratio is obtained for the image data set of an analysis target.

FIG. 4 is a flowchart showing a procedure of the perturbation evaluation process executed in steps S30 and S70 of FIG. 3.

In step S101, the perturbation generation unit 14 generates a perturbation for an input image. Here, based on the parameters stored in the perturbation setting value storage unit 13, a perturbation is generated to randomly mask an image of each region obtained by dividing the input image into predetermined ranges. Specifically, for example, a perturbation value of "0" or "1" is randomly set for each region obtained by dividing the input image into predetermined ranges. A size of the region at this time, an appearance ratio of "0" and "1" in a perturbation value, and the like are determined according to the parameter values stored in the perturbation setting value storage unit 13.

In step S102, the perturbation superimposition unit 15 combines the perturbation generated in step S101 with the input image to generate a perturbation image. Here, a partial image corresponding to each region of the input image is multiplied by the perturbation value of "0" or "1" set in step S101. Accordingly, in each region where the perturbation value is "0", a partial image corresponding to a portion in an input image is hidden by a perturbation, whereas in each region where the set perturbation value is "1", a partial image corresponding to a portion in an input image is not hidden by a perturbation, so that a perturbation image in which the perturbation is superimposed on the input image can be generated.

In step S103, the image recognition unit 16 performs inference on the perturbation image generated in step S102. In this inference, by executing the image recognition process using a trained DNN, a recognition target object included in an input image before the perturbation is superimposed is extracted, and a type of the object and a range of a region occupied by the object in the image are recognized. At this time, the certainty of the obtained inference result may be obtained. In addition, the image recognition unit 16 may be provided outside the analysis device 1, and the analysis device 1 may acquire the result of the inference executed in the image recognition unit 16 in step S103.

In step S104, the evaluation value acquisition unit 17 calculates an evaluation value for the inference result in step S103. For example, an object region obtained by the inference is compared with an object region indicated by the ground-truth label, and an intersection over union (IoU) between the object regions is calculated as an evaluation value (score) for the inference result. In this case, if the inference result and the ground-truth label do not completely match, the evaluation value is 0, and if the inference result and the ground-truth label completely match, the evaluation value is 1. At this time, instead of the ground-truth label, an inference result for an input image to which no perturbation is applied may be acquired, and the inference result may be compared with the inference result in step S103 to calculate an evaluation value. The evaluation value may be calculated in consideration of a recognition class (type of object) in the inference result. For example, when the recognition class in the inference matches a type of an object indicated by a ground-truth label, a value of IoU is set as the evaluation value, and when the recognition class is different, the evaluation value is set to 0 regardless of the value of IoU. Alternatively, even if the recognition class and the ground-truth label are different from each other, if the recognition class and the ground-truth label are in the same category, the evaluation value is adjusted by multiplying a predetermined penalty rate (for example, 0.5) by the value of IoU. The evaluation value for the inference result in step S103 can be calculated by any other method.

In step S105, the saliency map generation unit 18 generates saliency map regarding a saliency degree in the inference in step S103 based on the evaluation value calculated in step S104. Specifically, for example, the saliency map can be generated by calculating the product of the perturbation superimposed on the input image by the perturbation superimposition unit 15 in step S102 and the evaluation value calculated in step S104 for each partial image corresponding to each region of the input image in which the perturbation is set. In the saliency map, the magnitude of the evaluation value for the inference is represented for each partial image corresponding to each region where the perturbation value is "1" in the perturbation image, that is, each region not hidden by the perturbation. That is, in the saliency map, a region of the input image in which the same or similar inference result can be obtained by using an image of a portion not hidden by the perturbation regardless of the presence or absence of the perturbation is represented together with the similarity of the inference result. Such information corresponds to a saliency degree in the inference, and it can be said that the saliency degree in the inference is higher as a value of the saliency map (similarity of the inference result) is larger. On the other hand, an image region in which the value of the saliency map is small is greatly affected by the portion hidden by the perturbation, and indicates that the same inference result as that of an original input image on which the perturbation is not superimposed cannot be reproduced even when the image recognition unit 16 views the partial image in the region when the inference is performed on the perturbation image.

In step S106, the saliency map integration unit 19 further integrates the saliency map generated in step S105 with respect to an integration result of the saliency map obtained in the previous process.

In step S107, it is determined whether the processes of steps S101 to S106 have been completed a predetermined number of times (for example, N times). When the number of times of execution of the processes of steps S101 to S106 is less than N, the process returns to step S101, and after the perturbation is regenerated in step S101, the processes of step S102 and subsequent steps are executed to repeat the integration of the saliency map. On the other hand, when the number of executions of the processes of steps S101 to S106 reaches N, the perturbation evaluation process shown in the flowchart of FIG. 4 is ended.

In the perturbation evaluation process of steps S30 and S70 of FIG. 3, as described above, the processes of steps S101 to S107 are repeatedly executed N times. As a result, the saliency map is integrated each time the number of executions is increased. Since the perturbation superimposed on the input image has high randomness, the value of the saliency degree of the portion corresponding to the saliency region becomes large and the values of the other portions become relatively small in the integration result of the saliency map after the execution of N times. Therefore, the saliency region can be expressed by the integration result of the saliency map.

FIG. 5 is a flowchart showing a procedure of the perturbation ratio tuning process executed in step S80 of FIG. 3.

In step S201, the aggregation unit 211 aggregates evaluation values (scores) of N times calculated by the evaluation value acquisition unit 17 in the perturbation evaluation process of step S70 in FIG. 3. Here, for example, the number of appearances of each evaluation value in the calculation results of N times is counted, and a count value for each obtained evaluation value is converted into a histogram. Accordingly, the distribution of the evaluation values for the inference result of the image recognition unit 16 can be obtained for N perturbation images obtained by randomly superimposing the perturbation on the input image.

In step S202, the statistical processing unit 212 calculates a statistical value according to the distribution of the evaluation values aggregated in step S201. Here, the statistical value according to the distribution of evaluation values can be calculated by calculating an average value Sa and a variance Sv for an aggregation result for each evaluation value according to the calculation result of N times. The statistical value calculated in step S202 represents the magnitude of an influence of the random perturbation superimposed on the input image on the image recognition process, that is, the above-described perturbation influence degree. In other words, in step S202, the statistical information in the distribution of the evaluation values for the inference result of the image recognition unit 16 is calculated as the perturbation influence degree.

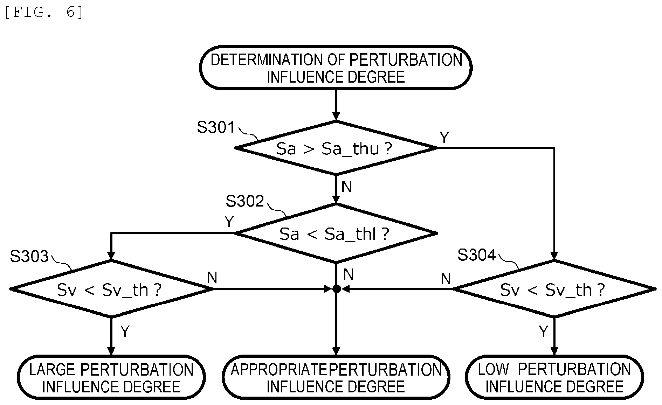

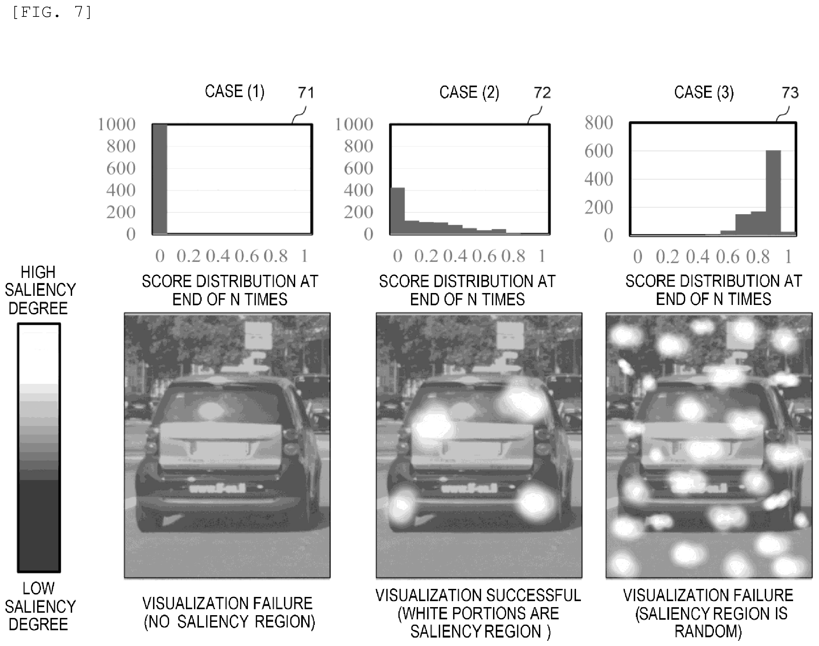

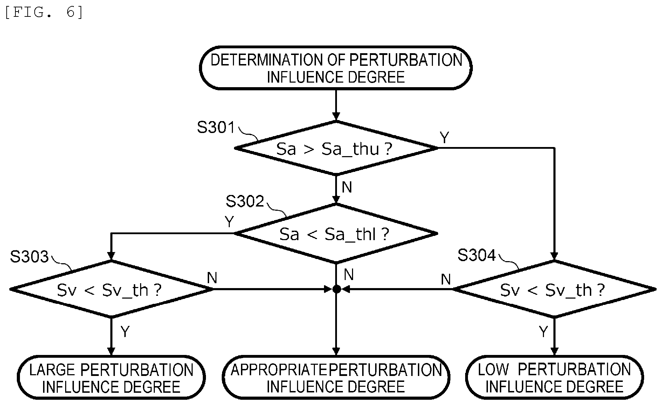

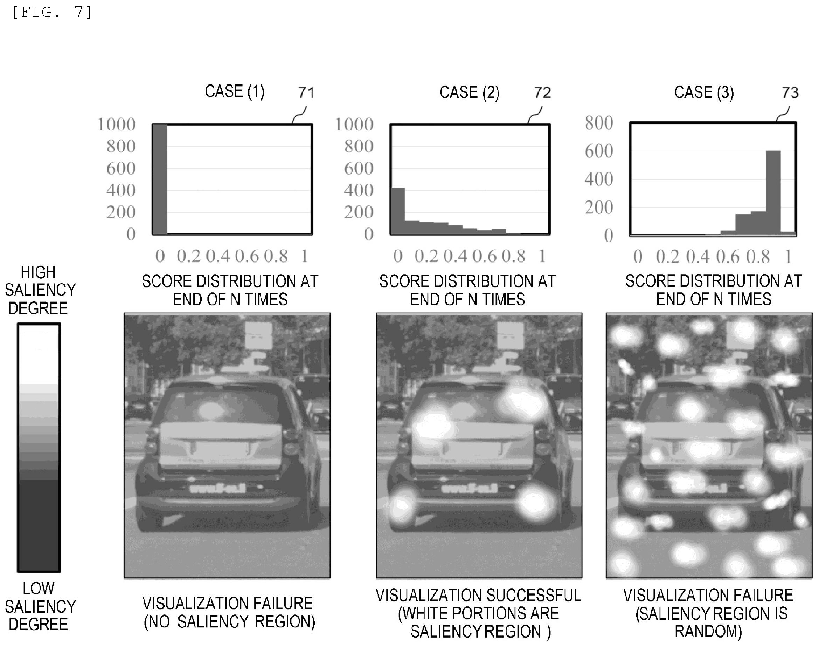

In step S203, the determination unit 213 determines the perturbation influence degree based on the statistical value calculated in step S202. Here, for example, it is determined whether the perturbation influence degree is appropriate or too large or too small by using a determination threshold set in advance by the user via the GUI 23, and the obtained determination result is output to the parameter tuning unit 22. A perturbation influence degree determination method in step S203 will be described later with reference to FIGS. 6 and 7.

In step S204, the parameter tuning unit 22 determines whether the perturbation influence degree corresponds to "appropriate", "small influence degree", or "large influence degree" based on the determination result of the perturbation influence degree input from the determination unit 213 in step S203. When it is determined that the perturbation influence degree is "appropriate", the process proceeds to step S205. When it is determined that the perturbation influence degree is "small influence degree", that is, when the perturbation influence degree is too small, the process proceeds to step S206. When it is determined that the perturbation influence degree is "large influence degree", that is, when the perturbation influence degree is too large, the process proceeds to step S207.

In step S205, the parameter tuning unit 22 determines that the parameter tuning is completed, and ends the perturbation ratio tuning process shown in the flowchart of FIG. 5. In this case, the parameter tuning is not performed, and therefore, in the determination process of step S90 executed after the perturbation ratio tuning process of step S80 in the flowchart of FIG. 3, it is determined that the tuning of the perturbation parameter is completed.

In step S206, the parameter tuning unit 22 adjusts the parameter values of the parameters stored in the perturbation setting value storage unit 13 to increase the intensity of the perturbation by increasing the perturbation ratio more than the present. As a result, in a case where the perturbation influence degree is too small with the current parameter value and thus an influence on the inference result is considered to be limited even when the perturbation is superimposed on the input image, the determination result of the perturbation influence degree obtained in step S203 is fed back, and the parameter tuning is performed to automatically increase a ratio of the perturbation superimposed on the input image.

In step S207, the parameter tuning unit 22 adjusts the parameter values of the parameters stored in the perturbation setting value storage unit 13 to weaken the intensity of the perturbation by reducing the perturbation ratio than the present. Accordingly, in a case where the perturbation influence degree is too large with the current parameter value and thus it is difficult to obtain a correct inference result when the perturbation is superimposed on the input image, the determination result of the perturbation influence degree obtained in step S203 is fed back, and the parameter tuning is performed to automatically lower a perturbation ratio of the perturbation superimposed on the input image.

In step S206 or S207, when the parameter tuning of the perturbation setting value storage unit 13 is performed to change the perturbation ratio according to the perturbation influence degree, the perturbation ratio tuning process shown in the flowchart of FIG. 5 ends.

FIG. 6 is a flowchart showing an example of the perturbation influence degree determination method performed in step S203 of FIG. 5.

In step S301, the average value Sa of the statistical value calculated in step S202 of FIG. 5 is compared with an upper threshold Sa_thu of the preset average value. As a result, if the average value Sa is larger than the upper threshold Sa_thu, the process proceeds to step S304, and if the average value Sa is equal to or smaller than the upper threshold Sa_thu, the process proceeds to step S302.

In step S302, the average value Sa is compared with a lower threshold Sa_thl of the preset average value. As a result, if the average value Sa is less than the lower threshold Sa_thl, the process proceeds to step S303, and if the average value Sa is equal to or larger than the lower threshold Sa_thl, it is determined that the perturbation influence degree is appropriate, and the determination of the perturbation influence degree ends.

In step S303, the variance Sv of the statistical value calculated in step S202 of FIG. 5 is compared with a preset threshold Sv_th. As a result, if the variance Sv is less than the threshold Sv_th, it is determined that the evaluation value is biased to a low evaluation side because the perturbation influence degree is too large, and the determination of the perturbation influence degree ends. On the other hand, if the variance Sv is equal to or larger than the threshold Sv_th, it is determined that the perturbation influence degree is appropriate, and the determination of the perturbation influence degree ends.

In step S304, the variance Sv is compared with the threshold Sv_th. As a result, if the variance Sv is less than the threshold Sv_th, it is determined that the evaluation value is biased to a high evaluation side because the perturbation influence degree is too small, and the determination of the perturbation influence degree ends. On the other hand, if the variance Sv is equal to or larger than the threshold Sv_th, it is determined that the perturbation influence degree is appropriate, and the determination of the perturbation influence degree ends.

FIG. 7 is a diagram showing a distribution example of an evaluation value (score) for each perturbation influence degree. In FIG. 7, a case (1) shown on a left side shows a distribution example of an evaluation value (score) in the saliency map obtained by repeating N times the processes of steps S101 to S107 of FIG. 4 and an example of a visualization result of the saliency region output in step S40 of FIG. 3 when the perturbation influence degree is too large. In this case, a correct inference result is not obtained due to a perturbation, and therefore, since the evaluation values are concentrated to 0 in the saliency map, it can be seen that the saliency region is not visible. Therefore, in the process of FIG. 6, the average value Sa is determined to be less than the lower threshold Sa_thl in steps S301 and S302, and the variance Sv is determined to be less than the threshold Sv_th in the subsequent step S303, so that it is determined that the perturbation influence degree is too large. As a result, in step S207 of FIG. 5, the parameter values are adjusted to reduce the perturbation ratio.

In FIG. 7, a case (2) shown at the center shows a distribution example of an evaluation value (score) in the saliency map obtained by repeating N times the processes of steps S101 to S107 of FIG. 4 and an example of a visualization result of the saliency region output in step S40 of FIG. 3 when the perturbation influence degree is appropriate. In this case, in a case where a specific saliency region (for example, a person) in the input image is not hidden due to a perturbation, a correct inference result is obtained, whereas in a case where the saliency region is hidden, a correct inference result is not obtained. Therefore, it can be seen that the evaluation values are appropriately dispersed in the saliency map, and the saliency region is easily visible. Therefore, in the process of FIG. 6, the average value Sa is determined to be equal to or larger than the lower threshold Sa_thl and equal to or smaller than the upper threshold Sa_thu in steps S301 and S302, and thus it is determined that the perturbation influence degree is appropriate. As a result, in step S205 of FIG. 5, it is determined that the parameter tuning is completed, and the tuning of the parameter value is not performed.

In FIG. 7, a case (3) shown on a right side shows a distribution example of an evaluation value (score) in the saliency map obtained by repeating N times the processes of steps S101 to S107 of FIG. 4 and an example of a visualization result of the saliency region output in step S40 of FIG. 3 when the perturbation influence degree is too small. In this case, even if the perturbation is superimposed on an input image, the inference result does not change much, and therefore, it is not known where the saliency region is present in the input image, and it can be seen that the visualization quality of the saliency region is degraded. Therefore, in the process of FIG. 6, the average value Sa is determined to be larger than the upper threshold Sa_thu in step S301, and the variance Sv is determined to be smaller than the threshold Sv_th in the subsequent step S304, so that it is determined that the perturbation influence degree is too small. As a result, in step S206 of FIG. 5, the parameter values are adjusted to increase the perturbation ratio.

According to the first embodiment of the invention described above, the following effects are obtained.

(1) The analysis method for the image recognition process by the analysis device 1 is a method of analyzing an image recognition process for recognizing a recognition target object appeared in an input image. In this analysis method, the processor 101, which is a computer, generates a plurality of perturbation images in which a perturbation is superimposed on an input image (step S102), and acquires evaluation values for a recognition result of an object obtained by executing an image recognition process on the plurality of perturbation images (step S104). Based on the evaluation values acquired for the perturbation images, the perturbation influence degree of the perturbation on the image recognition process is calculated (step S202), and the perturbation is adjusted based on the calculated perturbation influence degree (steps S206 and S207). In this way, it is possible to automatically adjust a perturbation necessary for visualization of a saliency region in inference in the image recognition process, and thus it is possible to significantly increase the analysis efficiency of a large-scale data set.
(2) In step S202, the perturbation influence degree is calculated based on the distribution of the evaluation values acquired for the perturbation images. Specifically, statistical information (average value Sa and variance Sv) in the distribution of the evaluation values acquired for perturbation images is calculated, and the statistical information is used as the perturbation influence degree. Thus, the perturbation influence degree of the perturbation on the image recognition process can be calculated appropriately and quantitatively.
(3) In the tuning of the perturbation, when the distribution of the evaluation values is biased to the high evaluation side (steps S301 and S304: Yes), the intensity of the perturbation is adjusted to be increased (step S206), and when the distribution of the evaluation values is biased to the low evaluation side (steps S302 and S303: Yes), the intensity of the perturbation is adjusted to be decreased (step S207). Thus, the intensity of the perturbation can be automatically adjusted to an optimum value according to the distribution of the evaluation values.
(4) The analysis device 1 is a device that analyzes an image recognition process for recognizing a recognition target object appeared in an input image. The analysis device 1 includes: the perturbation superimposition unit 15 that generates a plurality of perturbation images in which a perturbation is superimposed on the input image; the evaluation value acquisition unit 17 that acquires evaluation values for a recognition result of an object obtained by the image recognition unit 16 executing the image recognition process on the plurality of perturbation images generated by the perturbation superimposition unit 15; the perturbation ratio evaluation unit 21 that calculates a perturbation influence degree of the perturbation on the image recognition process based on the evaluation values acquired for the perturbation images by the evaluation value acquisition unit 17; and the parameter tuning unit 22 that adjusts the perturbation based on the perturbation influence degree calculated by the perturbation ratio evaluation unit 21. In this way, by using the analysis device 1, it is possible to automatically adjust a perturbation necessary for visualization of a saliency region in inference in the image recognition process, and thus it is possible to significantly increase the analysis efficiency of a large-scale data set.

### Second Embodiment

Next, an analysis method and an analysis device for an image recognition process according to a second embodiment of the invention will be described. In the first embodiment, an example of adjusting a perturbation ratio among perturbation parameters has been described. In addition, in the present embodiment, an example of adjusting the resolution of the perturbation will be described. A hardware structure of an analysis device 1A according to the present embodiment is the same as the hardware structure of FIG. 1 described in the first embodiment. Therefore, in the following description, the analysis device 1A according to the present embodiment will be described using the hardware structure of FIG. 1.

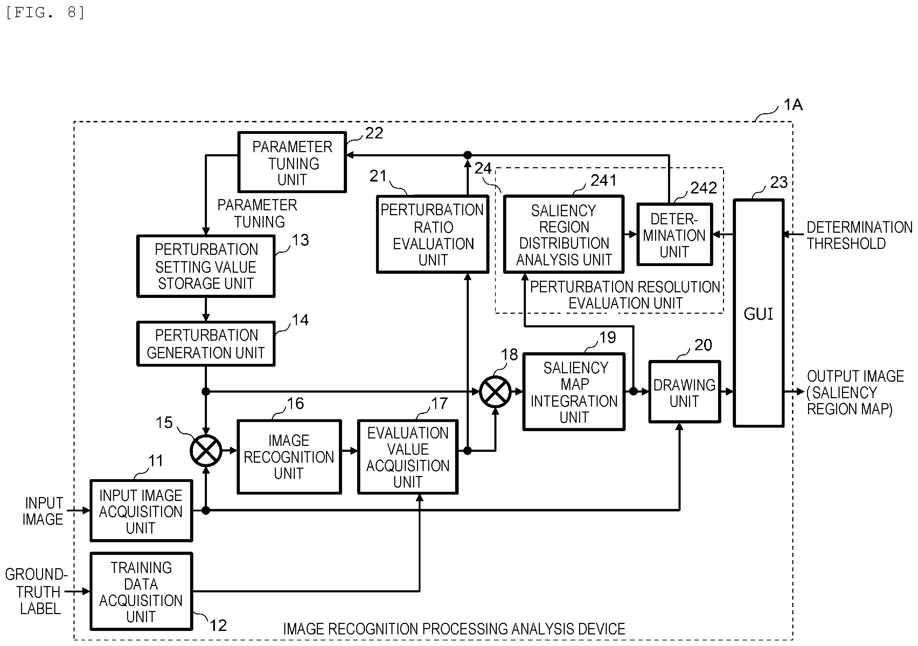

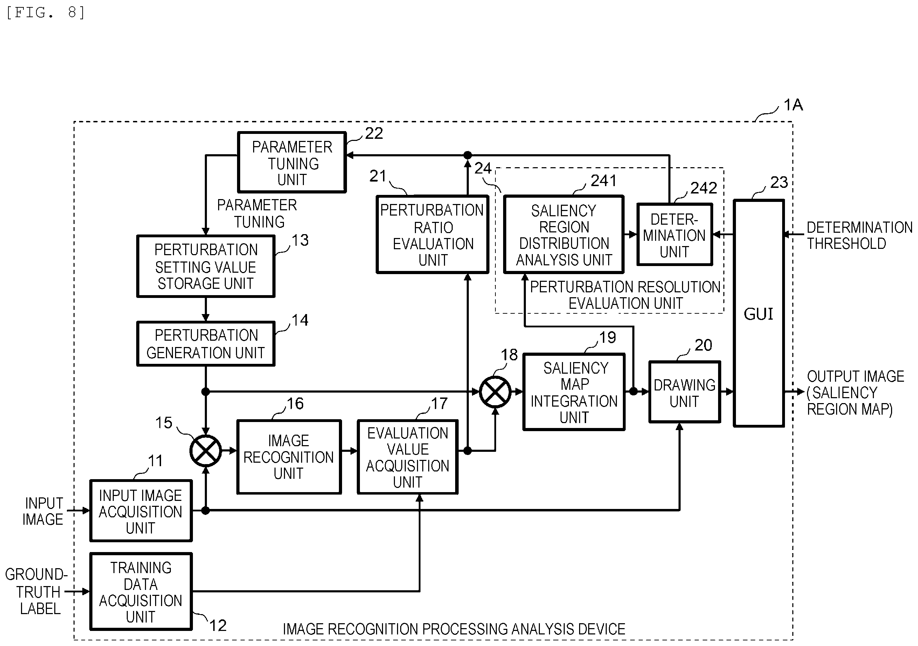

FIG. 8 is a functional block diagram showing a functional configuration example of the analysis device 1A according to the second embodiment of the invention. The analysis device 1A is different from the analysis device 1 described in the first embodiment in that a perturbation resolution evaluation unit 24 is further included.

The perturbation resolution evaluation unit 24 includes a saliency region distribution analysis unit 241 and a determination unit 242. The saliency region distribution analysis unit 241 analyzes the distribution of the saliency regions focused in the image recognition process when the image recognition unit 16 recognizes an object in the perturbation image based on the information of the saliency region obtained by the saliency map integration unit 19 integrating the saliency map. The determination unit 242 determines whether the resolution of the perturbation is appropriate based on an analysis result of the distribution of the saliency regions by the saliency region distribution analysis unit 241. The obtained determination result is notified to the parameter tuning unit 22 as an evaluation result of the resolution of the perturbation.

The parameter tuning unit 22 performs the tuning of the resolution of the perturbation in addition to the tuning of the perturbation ratio described in the first embodiment. That is, based on the evaluation result of the resolution of the perturbation by the perturbation resolution evaluation unit 24, the parameters stored in the perturbation setting value storage unit 13 are adjusted so that the resolution of the perturbation becomes an appropriate value.

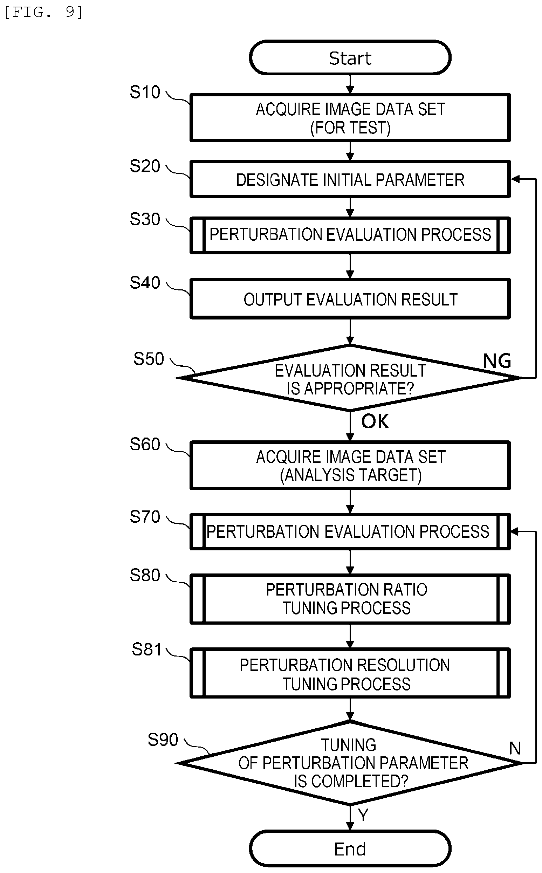

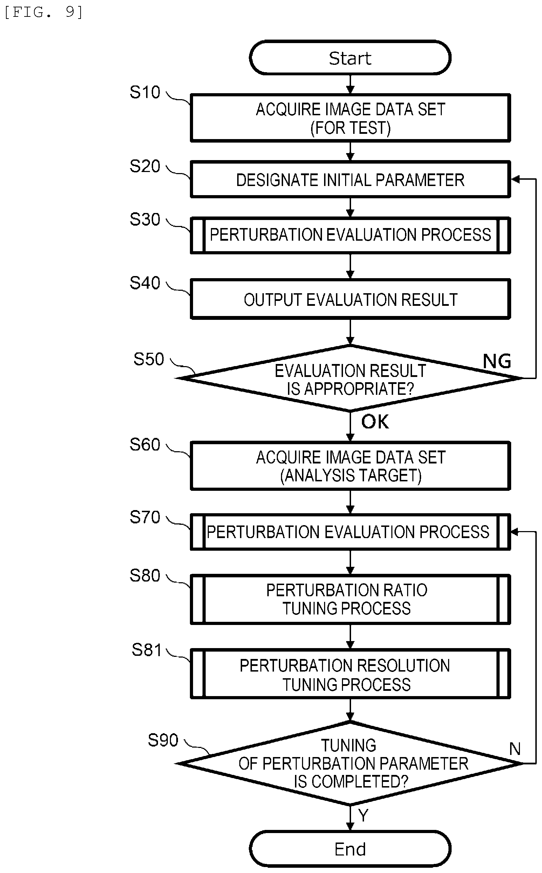

FIG. 9 is a flowchart showing the analysis method for an image recognition process according to the second embodiment of the invention. In the present embodiment, the analysis device 1A can analyze an image recognition result by the image recognition unit 16 by executing the process shown in the flowchart of FIG. 9 by the processor 101.

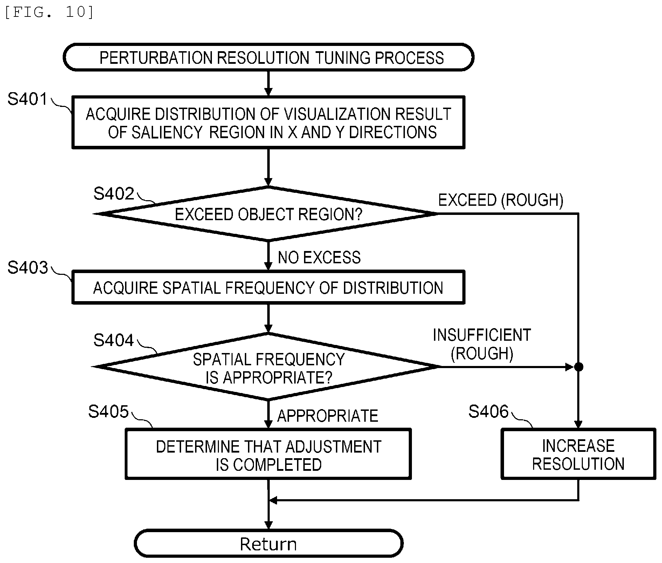

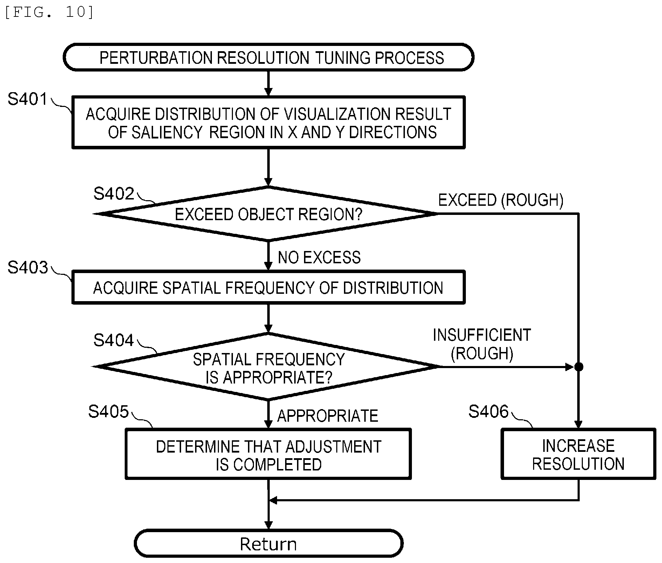

In steps S10 to S80, the same processes as those in the first embodiment are executed. After the process of step S80 is executed, in the subsequent step S81, a perturbation resolution tuning process based on the perturbation evaluation result obtained by the perturbation evaluation process executed in step S70 is executed. Here, the distribution of the saliency regions is analyzed by the perturbation resolution evaluation unit 24 using the information of the saliency region generated by the perturbation evaluation process, that is, the integration result of the saliency map by the saliency map integration unit 19. Based on the obtained analysis result, it is determined whether the resolution of the perturbation is appropriate, and the determination result is output to the parameter tuning unit 22. The parameter tuning unit 22 adjusts a value of a parameter related to the resolution of the perturbation among the perturbation parameters stored in the perturbation setting value storage unit 13 based on the determination result of the resolution of the perturbation input from the perturbation resolution evaluation unit 24. Details of the perturbation resolution tuning process will be described later with reference to the flowchart of FIG. 10.

In step S90, it is determined whether the tuning of the perturbation parameter is completed based on the determination result of the perturbation ratio obtained by the perturbation ratio tuning process performed in step S80 and the determination result of the perturbation resolution obtained by the perturbation resolution tuning process performed in step S81. Here, in a case where the determination results indicating that the perturbation ratio and the perturbation resolution are appropriate are respectively obtained in the perturbation ratio tuning process and the perturbation resolution tuning process executed immediately before, and thus the tuning of the parameter value is not performed, it is determined that the tuning of the perturbation parameter is completed, and the process shown in the flowchart of FIG. 9 is completed. On the other hand, in a case where the determination result indicating that the perturbation ratio is not appropriate is obtained in the perturbation ratio tuning process executed immediately before, or the determination result indicating that the resolution of the perturbation is not appropriate is obtained in the perturbation resolution tuning process executed immediately before, and thus the tuning of the perturbation parameters is performed, it is determined that the tuning of the perturbation parameters is not completed, and the process returns to step S70. In this case, the perturbation evaluation process in step S70, the perturbation ratio tuning process in step S80, and the perturbation resolution tuning process in step S81 are executed again using the adjusted parameter values. Accordingly, the tuning of the perturbation parameters is repeatedly performed until an appropriate perturbation ratio and resolution of the perturbation are obtained for the image data set of an analysis target.

FIG. 10 is a flowchart showing a procedure of the perturbation resolution tuning process executed in step S81 of FIG. 9.

In step S401, the saliency region distribution analysis unit 241 acquires the distribution of visualization results of the saliency region generated by integrating the pieces of saliency map of N times by the saliency map integration unit 19 in the perturbation evaluation process of step S70 of FIG. 9 in an x direction (a horizontal direction of the input image) and a y direction (a longitudinal direction of the input image), respectively. In a case where a predetermined condition is satisfied, for example, in a case where the size ratio between the x direction and the y direction of the object region indicated by the ground-truth label acquired by the training data acquisition unit 12 is equal to or larger than a predetermined value (for example, 2:1), the distribution of the visualization results of the saliency region may be acquired only in one direction having a larger size. In this case, the processes in step S402 and subsequent steps may be executed only for the direction.

In step S402, the determination unit 242 determines whether the distribution of the saliency regions acquired in step S401 exceeds the object region indicated by the ground-truth label acquired by the training data acquisition unit 12. Here, for example, when a value of the saliency region is normalized in a range of 0 to 1, if a portion having a value of 0.8 or more in the distribution of the saliency regions acquired in step S401 falls within the object region, it is determined that the distribution of the saliency regions does not exceed the object region, and the process proceeds to step S403. On the other hand, when the portion protrudes from the object region, it is determined that the distribution of the saliency regions exceeds the object region, and the process proceeds to step S406.

In step S403, the saliency region distribution analysis unit 241 acquires a spatial frequency of the distribution of the saliency regions acquired in step S401. Here, for example, the spatial frequency of the distribution of the saliency regions can be acquired by acquiring the number of peaks of the distribution of the saliency regions in the object region for each of the x direction and the y direction.

In step S404, the determination unit 242 determines whether the spatial frequency of the distribution of the saliency regions acquired in step S403 is appropriate. Here, for example, as described above, when the number of peaks of the distribution of the saliency regions is acquired as the spatial frequency, if the number of peaks is equal to or larger than a predetermined number (for example, 2), it is determined that the spatial frequency of the distribution of the saliency regions is appropriate, and the process proceeds to step S405. At this time, when the number of peaks in both the x direction and the y direction is the predetermined number or more, it may be determined that the spatial frequency of the distribution of the saliency regions is appropriate, or when the number of peaks in at least one of the x direction and the y direction is the predetermined number or more, it may be determined that the spatial frequency of the distribution of the saliency regions is appropriate. On the other hand, if the number of peaks is less than the predetermined number, it is determined that the spatial frequency of the distribution of the saliency regions is insufficient, and the process proceeds to step S406.

In step S405, the parameter tuning unit 22 determines that the parameter tuning is completed, and ends the perturbation resolution tuning process shown in the flowchart of FIG. 10. In this case, the tuning of the parameters is not performed because the resolution of the perturbation is appropriate.

In step S406, the parameter tuning unit 22 adjusts the parameter values of the parameters stored in the perturbation setting value storage unit 13 such that the perturbation resolution is increased more than the present. Accordingly, the determination result for the resolution of the perturbation performed in steps S402 and S404 is fed back, and the parameter tuning is performed to automatically increase the resolution of the perturbation superimposed on the input image.

In step S406, when the tuning of the parameters in the perturbation setting value storage unit 13 is performed to increase the insufficient resolution of the perturbation, the perturbation resolution tuning process shown in the flowchart of FIG. 10 ends.

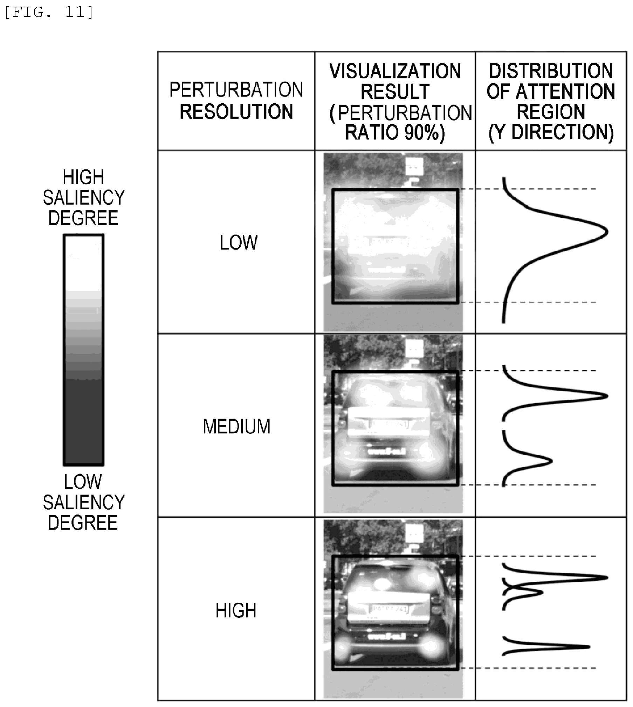

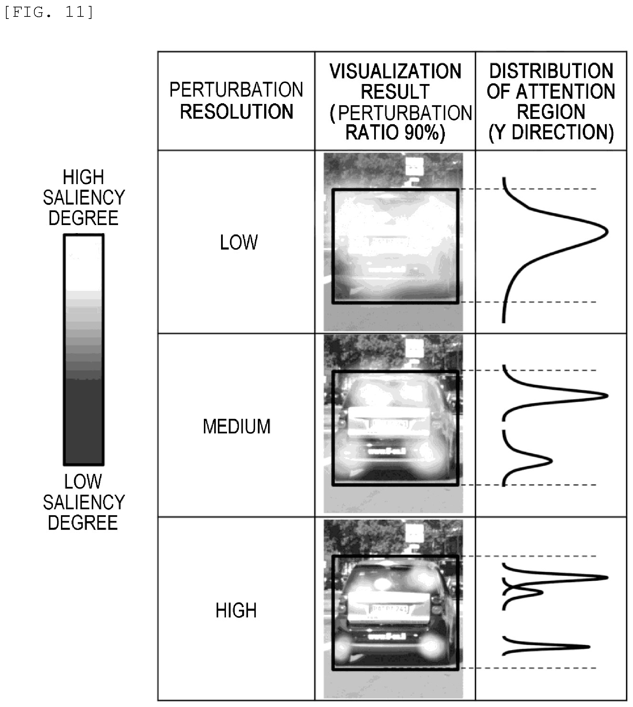

FIG. 11 is a diagram showing an example of a visualization result and a distribution of a saliency region for each resolution of the perturbation. In FIG. 11, an upper column shows an example in which the saliency region obtained when the resolution of the perturbation is low is visualized, and a distribution example of the saliency region in the y direction. In this case, since the resolution of the perturbation is low, it can be seen that only one peak exists in the distribution of the saliency regions in the y direction. Therefore, in the process of FIG. 10, it is determined in step S404 that the spatial frequency of the distribution of the saliency regions is insufficient. As a result, the parameter values are adjusted to increase the resolution of the perturbation in step S406.

In FIG. 11, a center column shows an example in which the saliency region obtained when the resolution of the perturbation is medium is visualized, and a distribution example of the saliency region in the y direction. In this case, it can be seen that there are two peaks in the distribution of the saliency regions in the y direction. Therefore, in the process of FIG. 10, it is determined in step S404 that the spatial frequency of the distribution of the saliency regions is appropriate. As a result, it is determined that the parameter tuning is completed in step S405, and the parameter values are not adjusted.

In FIG. 11, a lower column shows an example in which the saliency region obtained when the resolution of the perturbation is high is visualized, and a distribution example of the saliency region in the y direction. In this case, it can be seen that there are three peaks in the distribution of the saliency regions in the y direction. Therefore, also in this case, similarly to a case where the resolution of the perturbation is medium, in the process of FIG. 10, it is determined in step S404 that the spatial frequency of the distribution of the saliency regions is appropriate. As a result, it is determined that the parameter tuning is completed in step S405, and the parameter values are not adjusted.

As described above, in the analysis device 1A according to the present embodiment, it is determined that medium to high is appropriate as the resolution of the perturbation, and when the resolution of the perturbation is low, the tuning of the parameters is performed to increase the resolution of the perturbation.

Even if the resolution of the perturbation is too fine, it does not cause problems, so that it is preferable to adjust the perturbation parameters in a direction of increasing the insufficient resolution in the analysis device 1A according to the present embodiment. However, in general, as the resolution of the perturbation is lower, that is, as the perturbation superimposed on the input image is coarser, the evaluation result of the perturbation ratio is more likely to converge, and thus there is a possibility that the evaluation result of the perturbation ratio does not converge when the image recognition process is executed with high resolution of the perturbation from the beginning. Therefore, in a case where the tuning of the perturbation ratio does not converge for a long time (for example, in a case where the tuning does not converge even after five times), the tuning of the perturbation ratio may be performed again after the resolution of the perturbation is temporarily lowered.

According to the second embodiment of the invention described above, the processor 101, which is a computer, evaluates the resolution of the perturbation based on the distribution of the saliency regions in the image recognition process when the object is recognized in the perturbation image (steps S402 and S404). The perturbation is adjusted based on the evaluation result of the resolution of the perturbation (step S406). Thus, the resolution of the perturbation can be automatically adjusted to an optimum value according to the distribution of the saliency region.

### Third Embodiment

Next, an analysis method and an analysis device for an image recognition process according to a third embodiment of the invention will be described. In the first and second embodiments, an example in which only one recognition target object in the image recognition process is appeared in the input image has been described, but in the present embodiment, an example in which, when a plurality of recognition target objects are appeared in the input image, a perturbation is applied to each of the plurality of objects to perform tuning of the parameters will be described. The hardware structure of an analysis device 1B according to the present embodiment is the same as the hardware structure of FIG. 1 described in the first embodiment. Therefore, in the following description, the analysis device 1B according to the present embodiment will be described using the hardware structure of FIG. 1.

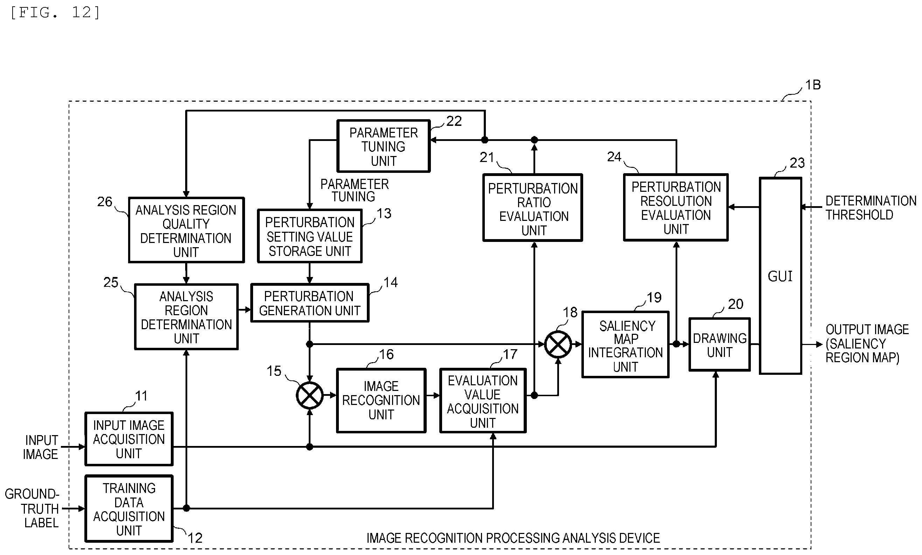

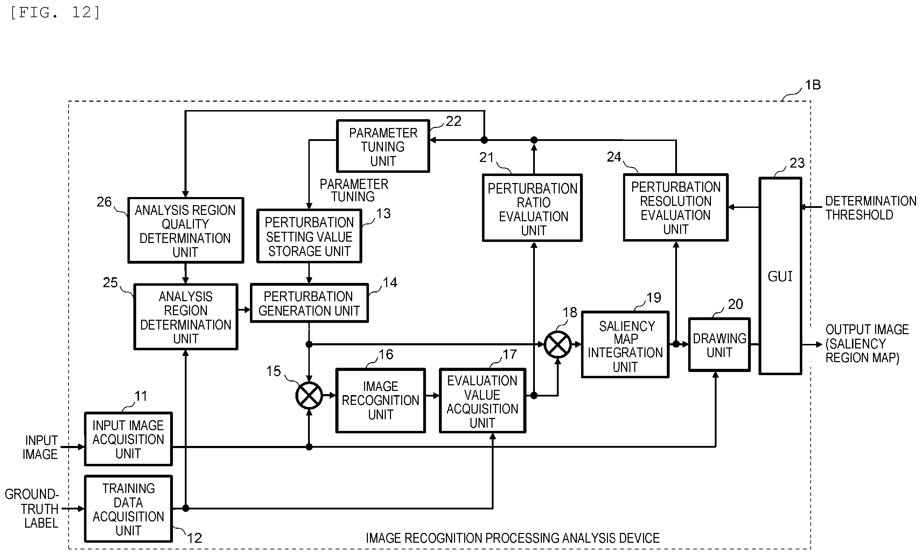

FIG. 12 is a functional block diagram showing a functional configuration example of the analysis device 1B according to the third embodiment of the invention. The analysis device 1B is different from the analysis device 1A described in the second embodiment in that the analysis device 1B further includes an analysis region determination unit 25 and an analysis region quality determination unit 26.

The analysis region determination unit 25 determines an analysis region corresponding to an object in the input image based on the ground-truth label acquired by the training data acquisition unit 12 for each of the plurality of recognition target objects appeared in the input image. In the present embodiment, for each portion of the input image corresponding to the analysis region set for each recognition target object by the analysis region determination unit 25, the perturbation generation unit 14 generates a perturbation serving as noise when the image recognition process is executed based on the setting values of the parameters stored in the perturbation setting value storage unit 13, and the perturbation superimposition unit 15 superimposes the perturbation.

The analysis region quality determination unit 26 determines whether the analysis region for each recognition target object determined by the analysis region determination unit 25 is appropriate based on the evaluation result of the perturbation ratio by the perturbation ratio evaluation unit 21 and the evaluation result of the resolution of the perturbation by the perturbation resolution evaluation unit 24. As a result, when it is determined that the analysis region is not appropriate, the analysis region determination unit 25 is instructed to reset the analysis region.

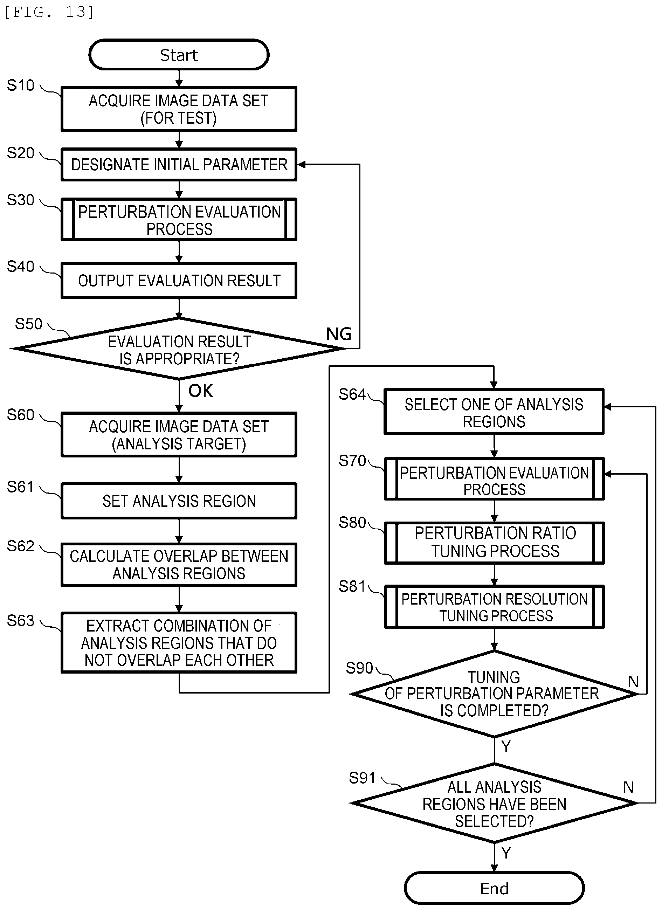

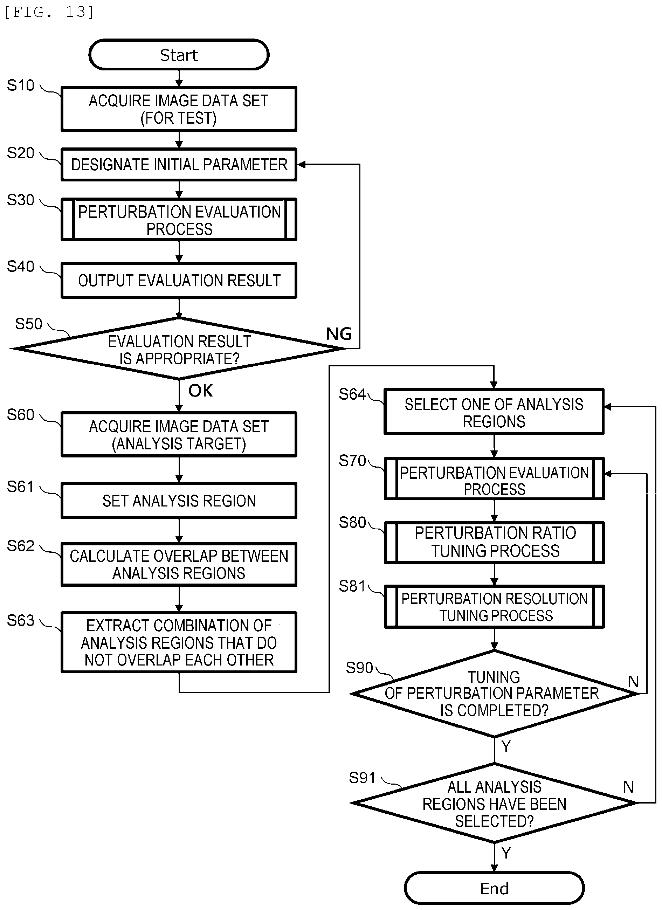

FIG. 13 is a flowchart showing an analysis method for an image recognition process according to the third embodiment of the invention. In the present embodiment, the analysis device 1B can analyze an image recognition result by the image recognition unit 16 by executing the process shown in the flowchart of FIG. 13 by the processor 101.

In steps S10 to S60, the same processes as those in the first embodiment are executed. After the process of step S60 is executed, in the subsequent step S61, the analysis region determination unit 25 sets analysis regions for a plurality of objects appeared in the input image included in the image data set of an analysis target acquired in step S60. Here, for example, for a region of each object indicated by the ground-truth label included in the image data set of an analysis target acquired in step S60, the object region is enlarged at a predetermined margin ratio (for example, 10%, 15%, or 20%) to set a plurality of analysis regions having different margin ratios for each object.

In step S62, the analysis region quality determination unit 26 calculates the overlap between the analysis regions set in step S61. Here, it is determined whether the analysis regions of the objects set for each margin ratio overlap each other on the input image.

In step S63, the analysis region quality determination unit 26 extracts a combination of analysis regions that do not overlap each other based on the overlap between the analysis regions calculated in step S62. Here, among the combinations of the analysis regions of each object set for each margin ratio in step S61, a combination of analysis regions in which the analysis regions do not overlap each other is extracted with a combination in which the margin ratio is the highest. Accordingly, an optimum analysis region can be set for each object.

In step S64, any analysis region is selected from the combination of analysis regions extracted in step S63. In steps S70 to S90 executed after step S64, the same processes as those described in the first and second embodiments are executed on the partial image in the analysis region selected in step S64.

In step S91, it is determined whether all the analysis regions extracted in step S63 have been selected in step S64. When there is an unselected analysis region, the process returns to step S64, and after any of the unselected analysis regions is selected in step S64, the processes of steps S70 to S90 are repeated for the partial image in the analysis region. When all the analysis regions have been selected, the process shown in the flowchart of FIG. 13 is completed.

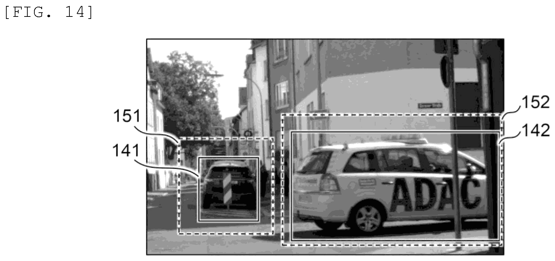

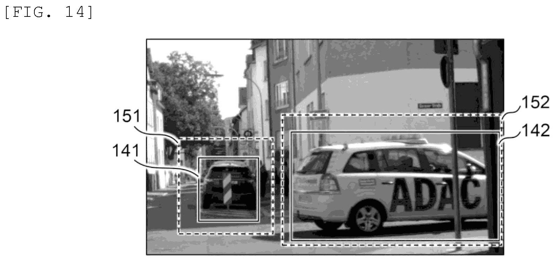

FIG. 14 is a diagram showing an example of an analysis region set for each object. In the example shown in FIG. 14, analysis regions 151, 152 are set for objects 141, 142 appeared in the input image such that these ranges are enlarged and do not overlap each other.

In the present embodiment, in order to confirm whether the combination of the analysis regions extracted in step S63 is appropriate, the processes of step S64 and the subsequent steps may be executed on the analysis regions having different margin ratios. For example, the number of times of generation of the perturbation image is set to be smaller than the predetermined number N described above, and the saliency region obtained for each analysis region is visualized and presented to the user, so that the user can confirm that there is no change in these saliency regions.

According to the third embodiment of the invention described above, the processor 101, which is a computer, sets an analysis region for each of a plurality of objects appeared in the input image (steps S61 to S63), and calculates a perturbation influence degree for each analysis region to adjust a perturbation (steps S64 to S81). Thus, even when the plurality of recognition target objects are appeared in the input image, the processing time can be shortened.

In the third embodiment of the invention described above, the analysis device 1B may not include the perturbation resolution evaluation unit 24. In this case, the analysis device 1B only performs the tuning of the perturbation ratio as in the first embodiment, and does not perform the tuning of the resolution of the perturbation.

### Fourth Embodiment

Next, an analysis method and an analysis device for an image recognition process according to a fourth embodiment of the invention will be described. In the third embodiment, an example has been described in which the tuning of the parameters is performed by setting an analysis region for each object when the plurality of recognition target objects in the image recognition process are appeared in the input image, but such a parameter tuning method cannot be well applied in a case where objects are densely packed. Therefore, in the present embodiment, an example will be described in which the objects appeared in the input image are grouped, an image is reconstructed for each group of objects in the entire data set, and the tuning of the parameters is performed, thereby efficiently analyzing the entire data set. A hardware structure of an analysis device 1C according to the present embodiment is the same as the hardware structure of FIG. 1 described in the first embodiment. Therefore, in the following description, the analysis device 1C according to the present embodiment will be described using the hardware structure of FIG. 1.

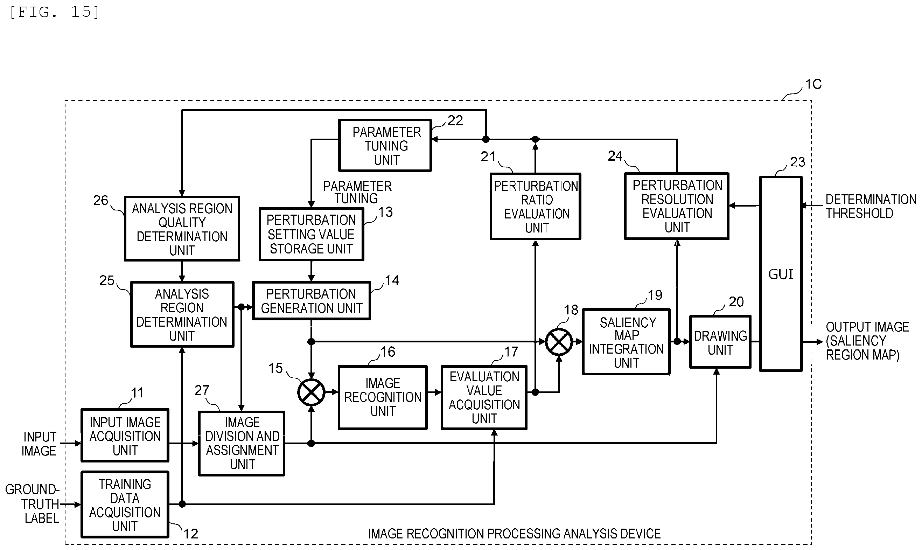

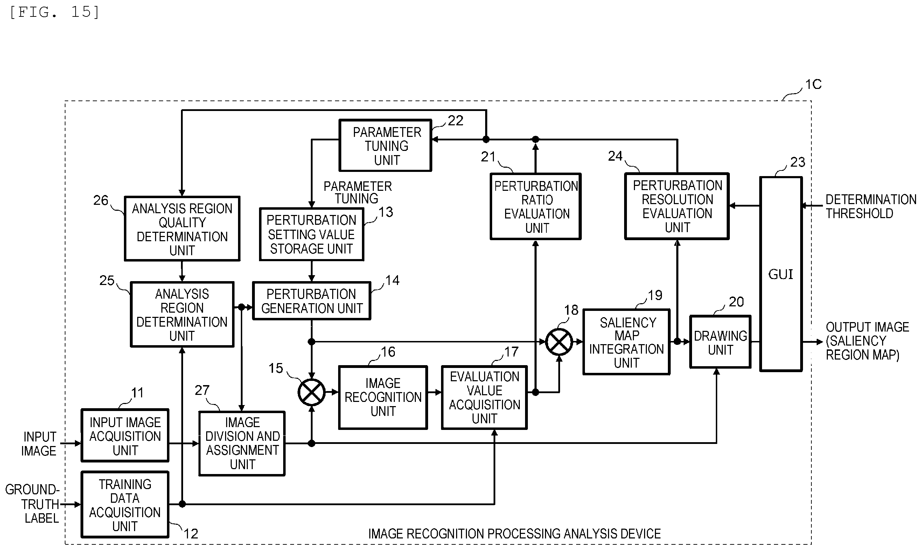

FIG. 15 is a functional block diagram showing a functional configuration example of an analysis device 1C according to the fourth embodiment of the invention. The analysis device 1C is different from the analysis device 1B described in the third embodiment in that the analysis device 1C further includes an image division and assignment unit 27.

The image division and assignment unit 27 divides the input image acquired by the input image acquisition unit 11 in units of objects appeared in the input image to acquire divided images for each object from the input image. Then, the divided images obtained from the entire data set are appropriately combined and synthesized to reconstruct an image of an analysis target. In the present embodiment, for the image reconstructed by the image division and assignment unit 27, the perturbation generation unit 14 generates a perturbation serving as noise when the image recognition process is executed based on the setting values of the parameters stored in the perturbation setting value storage unit 13, and the perturbation superimposition unit 15 superimposes the perturbation.

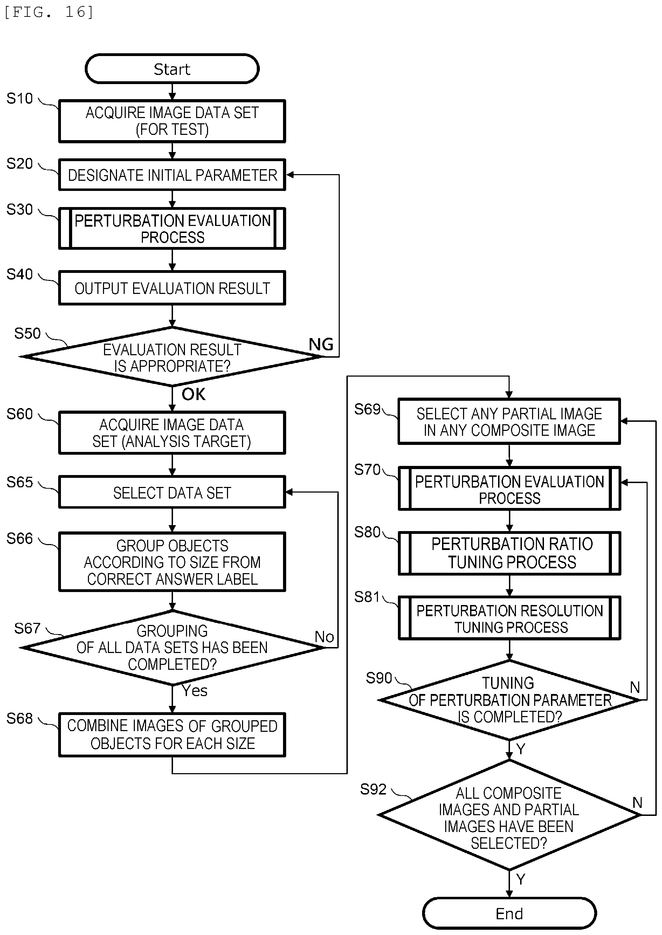

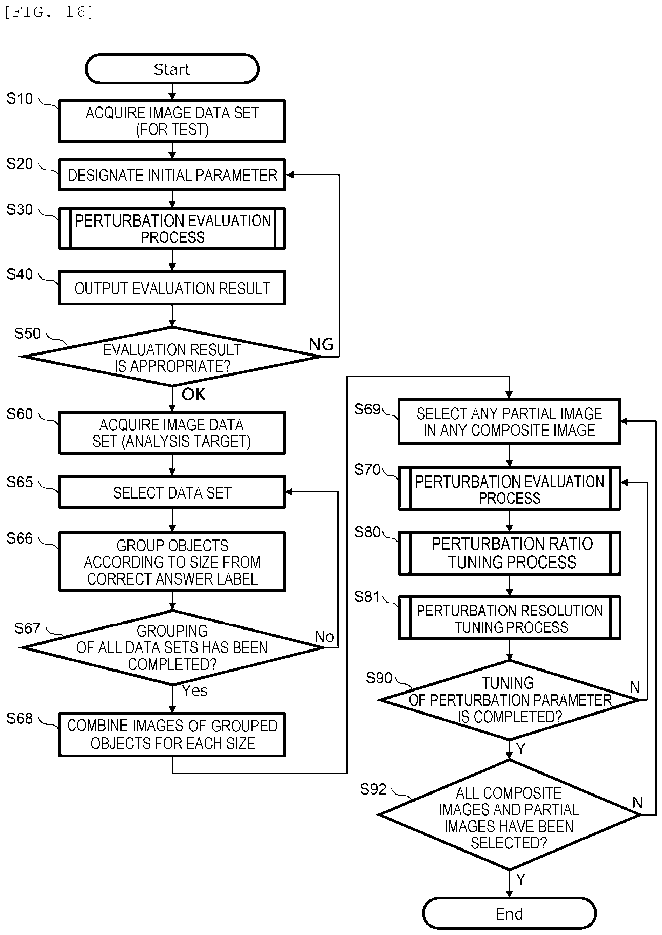

FIG. 16 is a flowchart showing an analysis method of an image recognition process according to the fourth embodiment of the invention. In the present embodiment, the analysis device 1C can analyze an image recognition result by the image recognition unit 16 by executing the process shown in the flowchart of FIG. 16 by the processor 101.

In steps S10 to S60, the same processes as those in the first embodiment are executed. After the process of step S60 is executed, in the subsequent step S65, the image division and assignment unit 27 selects any data set among the image data sets of an analysis target acquired in step S60, and reads a combination of the input image and the ground-truth label in the data set.

In step S66, the image division and assignment unit 27 groups the objects included in the input image included in the data set read in step S61 according to a size of the input image. Here, for example, each object is assigned to any one of three groups of "large", "medium", and "small" based on a size of a region of each object indicated by the ground-truth label included in the data set. The number of groups to be assigned is not limited to three, and the number of groups to be assigned can be freely set according to the specifications of the image recognition process executed by the image recognition unit 16.

In step S67, it is determined whether grouping of objects in the input image included in all the data sets of an analysis target acquired in step S60 has been completed. In a case where the grouping by the process of step S66 has been executed on all the recognition target objects appeared in the input images of all the data sets, the process proceeds to step S68. On the other hand, when there is an unclassified object for which the process of step S66 has not been executed, the process returns to step S65 to reselect a data set, and then the process of step S66 is executed again to continue grouping of objects.

In step S68, the image division and assignment unit 27 cuts out the images of the objects grouped in step S66 from the input image and combines the images for each size to generate composite images of an analysis target. For example, when each object is classified into three groups of "large", "medium", and "small" described above, a partial image in the analysis region set by the analysis region determination unit 25 for the object of each group is cut out from the input image in which the object is appeared. Then, different numbers of partial images are combined for each group to generate a composite image.

Specifically, for example, for each object classified into the "large" group, the number of assigned partial images per composite image is set to 1, and the partial image of each object is used as it is as a composite image of an analysis target. On the other hand, for example, for each object classified into the "medium" group, the number of assigned partial images per composite image is set to 2, and two partial images are composited to form one composite image. In this case, two regions (for example, left and right regions) of the composite image are assigned to different objects. Further, for example, for each object classified into the "small" group, the number of assigned partial images per composite image is set to 4, and four partial images are composited to form one composite image. In this case, four regions (for example, upper left, upper right, lower left, and lower right regions) of the composite image are assigned to different objects. The number of assigned partial images for each group in the composite image is not limited thereto, and may be any number.

In step S69, any partial image in any composite image is selected from the partial images of the objects included in the composite images generated in step S68. In steps S70 to S90 executed after step S69, the same processes as those described in the first and second embodiments are executed on the partial image selected in step S69.

In step S92, it is determined whether all the partial images in all the composite images generated in step S68 have been selected in step S69. When there is an unselected composite image or partial image, the process returns to step S69, and after any partial image is selected in step S69, the processes of steps S70 to S90 are repeated for the partial image. When all the partial images in all the composite images have been selected, the process shown in the flowchart of FIG. 16 is completed.

According to the fourth embodiment of the invention described above, the processor 101, which is a computer, cuts out a partial image corresponding to an analysis region for each object from an input image (steps S65 to S67), generates a composite image obtained by combining a plurality of partial images cut out from different input images (step S68), and calculates a perturbation influence degree for each partial image with respect to the composite image to adjust a perturbation (steps S69 to S81). With this configuration, when the plurality of recognition target objects are appeared in the input image, the data set can be analyzed more efficiently.

In the fourth embodiment of the present invention described above, as in the third embodiment described above, the analysis device 1C may not include the perturbation resolution evaluation unit 24. In this case, the analysis device 1C performs only the tuning of the perturbation ratio as in the first embodiment, and does not perform the tuning of the resolution of the perturbation.

The following modifications may be applied to the first to fourth embodiments described above.

### (Modifications)

In flowcharts of FIG. 3, 9, 13, 16, whether the perturbation is appropriate may be evaluated during the perturbation evaluation process of FIG. 4 executed in steps S30 and S70, and whether to continue the generation of the perturbation image may be determined. Specifically, for example, in the perturbation evaluation process of FIG. 4, the evaluation value of the perturbation image is acquired in step S104 every time the perturbation image is generated until the number of generated perturbation images reaches a predetermined upper limit number (the above-described number of times N). Here, when the number of generated perturbation images is less than the upper limit number N, the distribution of the evaluation values of the perturbation images acquired so far is aggregated in the perturbation ratio evaluation unit 21, and when the bias of the distribution exceeds a predetermined bias state (for example, when the variance Sv is less than the threshold Sv_th described above), the generation of the perturbation image is stopped. After the parameter tuning unit 22 changes the perturbation parameters to perform the perturbation tuning, the perturbation evaluation process is restarted to generate the perturbation image again from the beginning. In this way, since it is possible to prevent the perturbation evaluation process from being continuously executed due to an inappropriate perturbation, it is possible to further shorten the processing time.

The invention is not limited to the various embodiments and modifications described above, and includes various other modifications. For example, the embodiments described above have been specifically described to facilitate understanding of the invention, and the invention is not necessarily limited to those having all the configurations described above. A part of a configuration of one embodiment may be replaced with a part of a configuration of another embodiment. A configuration according to another embodiment may be added to a configuration according to one embodiment. A part of a configuration of each embodiment may be deleted, added with a part of another configuration, or replaced with a part of another configuration.

The invention is not limited to the embodiments described above, and various modifications can be made without departing from the gist of the invention.

### Reference Signs List

1, 1A, 1B, 1C: image recognition processing analysis device (analysis device)
11: input image acquisition unit
12: training data acquisition unit
13: perturbation setting value storage unit
14: perturbation generation unit
15: perturbation superimposition unit
16: image recognition unit
17: evaluation value acquisition unit
18: saliency map generation unit
19: saliency map integration unit
20: drawing unit
21: perturbation ratio evaluation unit
211: aggregation unit
212: statistical processing unit
213: determination unit
22: parameter tuning unit
23: graphical user interface (GUI)
24: perturbation resolution evaluation unit
241: saliency region distribution analysis unit
242: determination unit
25: analysis region determination unit
26: analysis region quality determination unit
27: image division and assignment unit

## Claims

1. A analysis method for an image recognition process for recognizing a recognition target object appeared in an input image, the method comprising:
generating, by a computer, a plurality of perturbation images in which a perturbation is superimposed on the input image;
acquiring, by the computer, evaluation values for a recognition result of the object obtained by executing the image recognition process on the plurality of perturbation images;
calculating, by the computer, a perturbation influence degree of the perturbation on the image recognition process based on the evaluation values acquired for the perturbation images; and
adjusting, by the computer, the perturbation based on the perturbation influence degree.

2. The analysis method for an image recognition process according to claim 1, wherein
the perturbation influence degree is calculated based on a distribution of the evaluation values acquired for the perturbation images.

3. The analysis method for an image recognition process according to claim 2, wherein
statistical information in the distribution of the evaluation values is calculated, and the statistical information is used as the perturbation influence degree.

4. The analysis method for an image recognition process according to claim 2 or 3, wherein
an intensity of the perturbation is adjusted to be increased when the distribution of the evaluation values is biased to a high evaluation side, and
the intensity of the perturbation is adjusted to be decreased when the distribution of the evaluation values is biased to a low evaluation side.

5. The analysis method for an image recognition process according to claim 2 or 3, wherein
the evaluation value of the perturbation image is acquired every time the perturbation image is generated until the number of generated perturbation images reaches a predetermined upper limit number, and
when the number of generated perturbation images is less than the upper limit number and the bias of the distribution of the evaluation values exceeds a predetermined bias state, the generation of the perturbation image is terminated and the perturbation is adjusted, and then the generation of the perturbation image is restarted from the beginning.

6. The analysis method for an image recognition process according to claim 1, wherein
the computer evaluates a resolution of the perturbation based on a distribution of a saliency region of the image recognition process when the object is recognized in the perturbation image, and
the computer adjusts the perturbation based on an evaluation result of the resolution of the perturbation.

7. The analysis method for an image recognition process according to claim 1, wherein
an analysis region is set for each of the plurality of objects appeared in the input image, and the perturbation influence degree is calculated for each analysis region to adjust the perturbation.

8. The analysis method for an image recognition process according to claim 7, wherein
a partial image corresponding to the analysis region is cut out from the input image for each object,
a composite image is generated by combining a plurality of the partial images cut out from different input images, and
the perturbation influence degree is calculated for each partial image with respect to the composite image to adjust the perturbation.

9. A device for analyzing an image recognition process for recognizing a recognition target object appeared in an input image, the device comprising:
a perturbation superimposition unit configured to generate a plurality of perturbation images in which a perturbation is superimposed on the input image;
an evaluation value acquisition unit configured to acquire evaluation values for a recognition result of the object obtained by executing the image recognition process on the plurality of perturbation images generated by the perturbation superimposition unit;
a perturbation ratio evaluation unit configured to calculate a perturbation influence degree of the perturbation on the image recognition process based on the evaluation values acquired for the perturbation images by the evaluation value acquisition unit; and
a parameter tuning unit configured to adjust the perturbation based on the perturbation influence degree calculated by the perturbation ratio evaluation unit.
